# EUROPÄISCHE PATENTSCHRIFT

(11) **EP 1 817 128 B1**
(45) Veröffentlichungstag und Bekanntmachung des Hinweises auf die Patenterteilung: **22.07.2009**
(21) Anmeldenummer: 05818386.4
(22) Anmeldetag: 30.11.2005
(51) Int. Cl.: B23B 51/04

(54) **SCHNEIDELEMENT, SCHNEIDENTRÄGER UND HOHLBOHRER**
CUTTING ELEMENT, CUTTER SUPPORT AND HOLLOW DRILL
ELEMENT DE COUPE, SUPPORT DE LAMES ET MECHE CREUSE

(30) Priorität: 30.11.2004 DE 102004057542
(43) Veröffentlichungstag der Anmeldung: 15.08.2007
(73) Patentinhaber: Jauch, Achim, 78073 Bad Dürrheim (DE)
(72) Erfinder: Jauch, Achim, 78073 Bad Dürrheim (DE)
(74) Vertreter: Fleuchaus, Michael A.
(86) Internationale Anmeldenummer: PCT/EP2005/012764
(87) Internationale Veröffentlichungsnummer: WO 2006/058719

(56) Entgegenhaltungen:
- DE-A1- 10 009 721
- DE-U- 7 226 347
- FR-A- 2 531 887
- US-A- 2 412 939
- US-A- 2 412 939
- US-A- 3 243 924
- US-A- 3 382 743
- US-A- 3 382 743
- US-A- 4 628 584
- PATENT ABSTRACTS OF JAPAN Bd. 1997, Nr. 09, 30. September 1997 (1997-09-30) & JP 09 123157 A (SANWA DAIYAMONDO KOGYO KK), 13. Mai 1997 (1997-05-13)
- PATENT ABSTRACTS OF JAPAN Bd. 1998, Nr. 13, 30. November 1998 (1998-11-30) & JP 10 202411 A (COSMO KOKI CO LTD), 4. August 1998 (1998-08-04)
- PATENT ABSTRACTS OF JAPAN Bd. 1997, Nr. 09, 30. September 1997 (1997-09-30) & JP 09 123157 A (SANWA DAIYAMONDO KOGYO KK), 13. Mai 1997 (1997-05-13)
- PATENT ABSTRACTS OF JAPAN Bd. 1998, Nr. 13, 30. November 1998 (1998-11-30) & JP 10 202411 A (COSMO KOKI CO LTD), 4. August 1998 (1998-08-04)

## Beschreibung

Die Erfindung betrifft ein Schneidelement gemäß Oberbegriff des Anspruchs 1 und einen Schneidenträger für einen Hohlbohrer gemäß Oberbegriff des Anspruchs 17. Ferner betrifft die Erfindung einen Hohlbohrer gemäß Anspruch 22.

Schneidelemente, Schneidenträger und Hohlbohrer der hier angesprochenen Art werden insbesondere zum Herstellen von Löchern in Lagen von dünnem flächigen Material wie beispielsweise Papier, Pappe, Kunststofffolie, Gummi etc. oder weichen, nachgiebigen Werkstoffen wie beispielsweise Schaumstoff und Styropor eingesetzt. Ein Hohlbohrer wird üblicherweise rotatorisch angetrieben und schneidet das Bohrgut mit einem Schneidelement im Wesentlichen kreisförmig aus. Der Hohlbohrer kann auch ohne zusätzlichen rotatorischen Antrieb verwendet werden, wobei ein Ausstanzen des Bohrguts mittels des Schneidelements erfolgt. Das ausgeschnittene Bohrgut wird typischerweise durch eine Bohrhülse beziehungsweise ein Rohr nach außen abgeführt. Die Bohrhülse wird im Folgenden auch als Schneidenträger bezeichnet. Schneidelemente, Schneidenträger und Hohlbohrer können auch unter dem Begriff Bohrwerkzeuge zusammengefasst werden.

Hohlbohrer werden weitestgehend einteilig aus Werkzeugstahl gefertigt. Die Herstellung erfolgt durch Zerspanen von Vollmaterial.

Auch Hohlbohrer, bei denen Schneidelement und Schneidenträger als getrennte Bauteile ausgeführt sind, sind bereits bekannt. So ist in dem Gebrauchsmuster DE 7005824 U1 ein Papierbohrer beschrieben, bei dem auf das Rohr des Papierbohrers an der Schneidseite eine das Schneidelement bildende Hartmetallkrone aufgelötet ist. Die Verbindungsstelle zwischen Rohr und Hartmetallkrone ist ineinander passend konisch ausgeführt. Auf diese Weise wird die Lötfläche erheblich vergrößert und der Konus übernimmt einen großen Teil der auftretenden Kräfte.

Aus der Gattungsgebenden Patentschrift US 5,098,234 ist ebenfalls ein Schneidelement bekannt, das an ein separat hergestelltes Rohr angebracht ist. Das Rohr kann aus demselben Material wie das Schneidelement oder aus einem anderen Material hergestellt sein. Das Rohr kann auch mittels eines anderen Herstellungsverfahrens angefertigt werden als das Schneidelement. Die Verwendung unterschiedlicher Herstellungsverfahren für das Rohr und das Schneidelement führt zu einem Hohlbohrer mit guten mechanischen Eigenschaften. Das Schneidelement ist konisch ausgeführt und weist an seiner Außenseite konvexe Einbuchtungen auf.

Aus der Patentanmeldung JP 11156617 A ist ein diamantbeschichteter Hohlbohrer bekannt, bei dem das ringförmige Ende in axialer Richtung konvex und konkav geformt ist. Der Hohlbohrer wird drehend betrieben. Die konkaven und konvexen Formgebungen dienen der Unterdrückung von Vibrationen während des Einsatzes des Hohlbohrers.

Aufgabe der Erfindung ist es, ein Schneidelement, einen Schneidenträger und einen Hohlbohrer zu schaffen, die effizient zum Bohren eingesetzt werden können.

Diese Aufgabe wird durch ein Schneidelement mit den Merkmalen des Anspruchs 1 gelöst.

Das Schneidelement wird auch als Bohrkrone oder Schneide bezeichnet. Der Schneidenträger wird auch als Rohrträger oder Rohr bezeichnet. Die Aufzählung der Bezeichnungen ist nicht abschließend.

Das erfindungsgemäße Schneidelement umfasst einen Schneidbereich sowie einen im Wesentlichen zylinderförmigen Bereich und zeichnet sich dadurch aus, dass der im Wesentlichen zylinderförmigen Bereich auf der Innenseite in vorzugsweise regelmäßigen Abständen angeordnete, in Richtung des Schneidbereichs sich öffnende Vertiefungen aufweist. Hierdurch wird ein effizienter Einsatz des Schneidelements beim Bohren ermöglicht. Die Vertiefungen können auch als Kavitäten bezeichnet werden.

Bei einem Ausführungsbeispiel der Erfindung verlaufen die Vertiefungen in axialer Richtung, wobei sie vorzugsweise in Umfangsrichtung in einem Abstand zueinander angeordnet sind. Durch die in Umfangsrichtung angeordneten, regelmäßigen Vertiefungen entsteht eine geometrische Form, die üblicherweise als Polygon beziehungsweise Vieleck bezeichnet wird.

Der im Wesentlichen zylinderförmige Bereich kann eine mehrkantige Innenform aufweisen, wobei die Kanten über je eine Vertiefung miteinander verbunden sind. Die Kanten können gerade verlaufen; sie können aber auch konvex, konkav, wellenförmig geformt sein. Auf diese Weise ergibt sich auf der Innenseite des Schneidelements eine geringe Reibung. Die mehrkantige Innenform geht an der dem Schneidbereich des Schneidelements entgegengesetzten Seite vorzugsweise konisch in eine zylindrische Innenform über.

Bei einem weiteren Ausführungsbeispiel der Erfindung zeichnen sich die Vertiefungen durch einen helixförmigen Verlauf auf der Innenseite des im Wesentlichen zylinderförmigen Bereichs aus. Der helixförmige Verlauf kann auch als spiralförmiger Verlauf beziehungsweise als Verlauf in sich verdrehter Polygone bezeichnet werden. Es können mehrere Vertiefungen vorgesehen sein, die unmittelbar aneinander anschließen und auf diese Weise eine einzige helixförmige Vertiefung bilden. Durch diese Ausgestaltung der Vertiefungen ist es möglich, das Bohr- beziehungsweise Schneidgut an durch die Helix definierten Stellen vorzeitig zu formen, um die beim Schneidvorgang auftretenden Axialdrücke zu verringern. Die Ausgestaltung der Vertiefungen führt zu einer gezielten Verlagerung der Höhenlinien auf der Innenseite des im Wesentlichen zylinderförmigen Bereichs, durch welche eine definierte Verformung, insbesondere eine definierte Faltenlegung des Schneidguts, eingeleitet werden kann.

Bevorzugterweise weist auch der Schneidbereich des Schneidelements Vertiefungen auf, die vorzugsweise helix- beziehungsweise spiralförmig verlaufen. Durch eine derartige Ausgestaltung können definierte Schneidgutverformungen bewirkt werden, die zu einer Minimierung der auftretenden Axialdrücke führen.

Bevorzugt ist in dem im Wesentlichen zylinderförmigen Bereich des Schneidelements ein Schmiermittel eingelagert. Dieses kann insbesondere in den Vertiefungen vorgesehen sein. Besonders bevorzugt wird ein Schmiermittel eingesetzt, welches erst bei Überschreitung einer bestimmten Grenztemperatur in flüssigen Zustand übergeht.

Bei einem besonders bevorzugten Ausführungsbeispiel der Erfindung sind die Vertiefungen im im Wesentlichen zylinderförmigen Bereich des Schneid elements als Einschnitte ausgeführt. Auf diese Weise werden im zylinderförmigen Bereich des Schneidelements sogenannte Zungen ausgebildet, die sich in axialer Richtung, in entgegengesetzter Richtung zum Schneidbereich erstrecken. Die Einschnitte werden auch als Schlitze beziehungsweise Zungenschlitze bezeichnet. Sie können bis in den Schneidbereich hineinragen. Die Zungen werden durch das Schneidgut nach außen und somit gegen den Schneidenträger gepresst. Die Einschnitte können auch im schneidelementseitigen Bereich des Schneidenträgers vorgesehen sein, so dass der Schneidenträger Zungen aufweist, die sich in axialer Richtung erstrecken.

Eine bleibende Verbindung von Schneidelement und Schneidenträger beispielsweise mittels Löten ist bei dieser Ausgestaltung nicht erforderlich. Das auf diese Weise gestaltete Schneidelement ist auswechselbar. Sobald das Schneidelement stumpf wird oder das Schneidgut verändert wird, kann das Schneidelement vorteilhafterweise gegen ein neues beziehungsweise anderes Schneidelement ausgewechselt werden. Selbstverständlich ist es auch bei diesem auswechselbaren Schneidelement möglich, es dauerhaft beispielsweise durch Löten, Kleben und/oder Laserschweißen mit dem Schneidenträger zu verbinden.

Bei einem weiteren bevorzugten Ausführungsbeispiel ist in dem im Wesentlichen zylinderförmigen Bereich ein vorzugsweise ebenfalls zylinderförmiger Ring angeordnet. Der Ring ist insbesondere aus Stahl gefertigt. Er kann aber auch aus einem anderen Material, beispielsweise Kunststoff, gefertigt sein. Der Ring wird vorzugsweise bei dem oben beschriebenen wechselbaren Schneidelement eingesetzt, um die Druckkraft auf die Zungen zu erhöhen, falls das Schneidelement zum Schneiden von derart weichen Materialien (beispielsweise sehr weichen Schaumstoffen) eingesetzt wird, die für sich betrachtet als Schneidgut zu weich sind, um die Zungen nach außen gegen den Schneidenträger zu pressen.

Die Aufgabe wird außerdem durch einen Schneidenträger mit den Merkmalen des Anspruchs 17 gelöst.

Der erfindungsgemäße Schneidenträger weist eine Öffnung für das Schneidelement auf und zeichnet sich durch einen konisch ausgeführten Bereich aus, bei dem sich der Konuswinkel in Gegenrichtung zur Öffnung für das Schneidelement öffnet. Ferner sind auf der Innenseite des Schneidenträgers Erhöhungen zur Aufnahme der Vertiefungen des Schneidelements vorgesehen, die insbesondere als Einschnitte ausgeführt sind. Durch die Erhöhungen wird ein Verdrehen des Schneidelements gegenüber dem Schneidenträger verhindert. Die konische Ausgestaltung des Schneidenträgers erschwert ein Lösen beziehungsweise ein Herausziehen des Schneidelements. Vorzugsweise beträgt der Konuswinkel 1° bis 6°, besonders bevorzugt 1,5° bis 3°, wobei der Konuswinkel als der Winkel zwischen der Achse des Schneidenträgers und dem konisch ausgeführten Bereich des Schneidenträgers definiert ist.

Bei einem weiteren Ausführungsbeispiel des Schneidenträgers schließt sich an den konisch ausgeführten Bereich in Gegenrichtung zur Öffnung für das Schneidelement ein zylinderförmiger Bereich an, der vorzugsweise einen kleineren Durchmesser aufweist als der konisch ausgeführte Bereich an der Stelle, an welcher er am weitesten von der Öffnung für das Schneidelement entfernt ist. Auf diese Weise wird eine Verbindungsstelle beim Schneidenträger geschaffen, durch welche eine formschlüssige Verbindung mit dem Schneidelement bewirkt werden kann.

Die Aufgabe wird ferner durch einen Hohlbohrer gemäß Anspruch 22 gelöst.

Der erfindungsgemäße Hohlbohrer zeichnet sich durch ein erfindungsgemäßes Schneidelement und einen erfindungsgemäßen Schneidenträger aus, die als separate Bauteile ausgeführt sind. Schneidelement und Schneidenträger können über eine Klemmverbindung lösbar miteinander verbunden sein. Alternativ oder zusätzlich zu der Klemmverbindung kann das Schneidelement auch über eine Klebe-, Löt- und/oder Schweißverbindung, insbesondere mittels Laserschweißens, mit dem Schneidenträger verbunden sein.

Bevorzugterweise weist der Hohlbohrer einen Schaft auf, an dem der Hohlbohrer beispielsweise durch eine Bohrvorrichtung aufgenommen werden kann, der als separates Bauteil ausgeführt ist. Der Schaft ist an dem dem Schneidelement entgegengesetzten Ende des Schneidenträgers vorgesehen. Die Materialien von Schneidelement, Schneidenträger und Schaft sind jeweils in Abhängigkeit vom Verwendungszweck des betreffenden Bauteils gewählt. Schneidelement, Schneidenträger und Schaft können bei einer derartigen separaten Bauweise auch mittels verschiedener Herstellungsverfahren hergestellt werden. Selbstverständlich können sie auch durch das gleiche Herstellungsverfahren erzeugt werden.

Durch die separate Herstellung der Bauteile Schneidelement, Schneidenträger und/oder Schaft entsteht weniger Materialabfall. Durch die gezielte Wahl der Herstellungsverfahren kann zusätzlich Energie eingespart werden. So kann beispielsweise beim Schneidenträger und beim Schaft auf ein Härten verzichtet werden. Bei der Herstellung von Hohlbohrern sind insbesondere die Beschaffungsmöglichkeit, der Rohmaterialpreis, die Verarbeitbarkeit, die Härtbarkeit, die Beschichtbarkeit und die Festigkeit des zu verarbeitenden Materials von Relevanz. Werden unterschiedliche Materialien für die verschiedenen Bauteile verwendet, so muss das Material nicht bezüglich möglichst vieler der aufgezählten Eigenschaften optimiert sein, sondern beim Schaft kann beispielsweise ein Material mit geringer Härtbarkeit und Beschichtbarkeit aber niedrigem Rohmaterialpreis gewählt werden, während bei dem Schneidelement ein Material mit hoher Härtbarkeit und guter Beschichtbarkeit aber auch hohem Preis gewählt werden könnte. Die separate Herstellung von Schneidelement, Schneidenträger und Schaft kann somit zu einer günstigen Herstellung und langen Standzeit der Bohrwerkzeuge führen. Beschichtungen der einzelnen Bauteile, insbesondere des Schneidelements und/oder des Schneidenträgers führen ebenfalls zu einer Erhöhung der Standzeit.

Für den Schaft wird vorzugsweise ein Material gewählt, welches ein gutes Einspannen des Hohlbohrers in einer Spindel ermöglicht. Für den Schneidenträger beziehungsweise das Rohr wird vorzugsweise ein Material ausgewählt, welches eine gute Dauerschwingfestigkeit aufweist. Das Material des Schneidelements wird hinsichtlich einer Erhöhung der Lebensdauer beziehungsweise Standzeit ausgewählt.

Alternativ zu einer separaten Herstellung von Schneidenträger und Schaft können diese Bauteile auch aus einem Stück gefertigt werden.

Weitere vorteilhafte Ausgestaltungen der Erfindung ergeben sich aus den Unteransprüchen und aus den anhand der Zeichnung nachfolgend dargestellten Ausführungsbeispielen. Es zeigen:
- Figur 1: eine Explosionsdarstellung (a), eine Draufsicht (b), eine Teilansicht (c) der Explosionsdarstellung und eine per- spektivische Darstellung (d) eines ersten Ausführungs- beispiels eines Schneidelements mit einem Teil eines Schneidenträgers,
- Figur 2: eine perspektivische Darstellung eines zweiten Ausfüh- rungsbeispiels eines Schneidelements,
- Figur 3: eine perspektivische Darstellung eines weiteren Aus- führungsbeispiels eines Schneidelements,
- Figur 4: eine perspektivische Darstellung eines weiteren Aus- führungsbeispiels eine Schneidelements,
- Figur 5: eine perspektivische Darstellung eines Ausführungs- beispiels eines Schneidbereichs eines Schneidele- ments,
- Figur 6: eine perspektivische Darstellung eines weiteren Aus- führungsbeispiels eines Schneidelements,
- Figur 7: eine Seitenansicht eines Ausführungsbeispiels eines Schneidenträgers und eines Schneidelements,
- Figur 8: eine Seitenansicht (a), eine perspektivische Teildarstel- lung (b) und eine Draufsicht (c) eines weiteren Ausführungsbeispiels eines Schneidenträgers und eines Schneidelements nach Figur 6 mit einem Ring,
- Figur 9: eine Seitenansicht (a) und eine Draufsicht (b) eines weiteren Ausführungsbeispiels eines Schneidenträgers und eine Seitenansicht (c) und eine Draufsicht (d) die- ses Schneidenträgers mit eingesetztem Schneidele- ment,
- Figur 10: eine perspektivische Darstellung der Verbindungsstelle zwischen einem Schneidenträger und einem Schneid- element,
- Figur 11: einen Längsschnitt (a), eine Draufsicht (b) einer Ver- bindungsstelle zwischen einem Schneidelement und einem Schneidenträger nach Figur 10 und einen Schneidenträger und ein Schneidelement vor und nach dem Zusammensetzen (c),
- Figur 12: eine Seitenansicht (a) und eine Draufsicht (b) eines Ausführungsbeispiels eines Hohlbohrers,
- Figur 13: eine Explosionsdarstellung eines weiteren Ausfüh- rungsbeispiels eines Hohlbohrers,
- Figur 14: eine Seitenansicht und eine Draufsicht eines weiteren Ausführungsbeispiels eines Hohlbohrers und eines den Hohlbohrer aufnehmenden Adapters,
- Figur 15: eine Seitenansicht (a), eine Draufsicht (b), eine Teilan- sicht (c) der Seitenansicht und eine perspektivische Explosionsdarstellung (d) eines weiteren Ausführungs- beispiels eines Hohlbohrers,
- Figur 16: eine Seitenansicht (a), eine Draufsicht (b), eine Teilan- sicht (c) der Seitenansicht, eine perspektivische Explo- sionsdarstellung (d) und eine Teilansicht (e) der per- spektivischen Explosionsdarstellung einer weiteren Ausführungsform eines Hohlbohrers,
- Figur 17: eine perspektivische Explosionsdarstellung (a) und eine Seitenansicht (b) eines weiteren Ausführungsbeispiels eines Schneidelements und eines Schneidenträgers,
- Figur 18: eine perspektivische Explosionsdarstellung (a) und eine Seitenansicht (b) eines weiteren Ausführungsbeispiels eines Schneidelements und eines Schneidenträgers und
- Figur 19: eine perspektivische Explosionsdarstellung (a) und eine Seitenansicht (b) eines Ausführungsbeispiels eines Schneidelements und eines Schneidenträgers.

In den Figuren bezeichnen gleiche Bezugszeichen strukturell beziehungsweise funktionell gleichwirkende Komponenten.

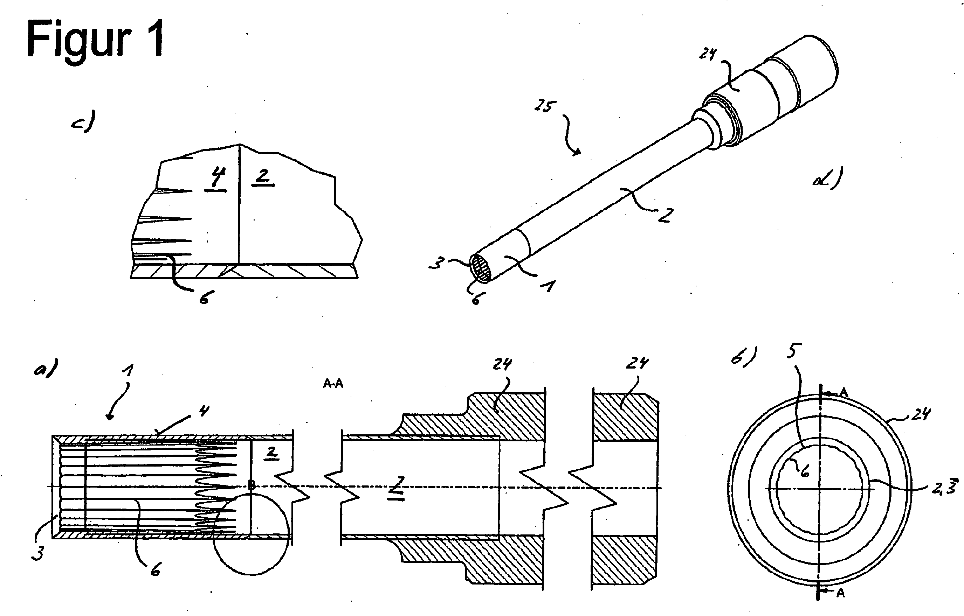

Figur 1, Darstellung (a) zeigt eine Explosionsdarstellung eines Schneidelements 1, welches mit einem Schneidenträger 2 verbunden ist, welches wiederum mit einem Schaft 24 verbunden ist. Schneidelement 1, Schneidenträger 2 und Schaft 24 sind vorzugsweise Komponenten eines Hohlbohrers. Das Schneidelement 1 weist einen vorzugsweise konischen Schneidbereich 3 und einen sich an den Schneidbereich 3 anschließenden, im Wesentlichen zylinderförmigen Bereich 4 auf, der vorzugsweise -wenn überhauptnur eine geringe Konizität aufweist, wobei die Bohrungssteigung bevorzugt 1:50 bis 1:100 beträgt, um rasch ein freies Laufen des Bohrguts zu ermöglichen. Darstellung (b) zeigt eine Draufsicht der in der Darstellung (a) gezeigten Ausführungsform. Darstellung (d) zeigt eine perspektivische Zusammenbauzeichnung der in der Darstellung (a) gezeigten Ausführungsform.

Die Innengeometrie ist bei dieser Ausbildung im Wesentlichen sternförmig ausgestaltet. Hierfür sind auf der Innenseite des zylinderförmigen Bereichs 4 des Schneidelements 1 Vertiefungen 5 vorgesehen, die in axialer Richtung verlaufen und in Umfangsrichtung beabstandet zueinander angeordnet sind. Die Vertiefungen 5 sind jeweils über eine vorzugsweise als in den zylinderförmigen Bereich hineinragende Spitze ausgebildete Erhöhung 6 miteinander verbunden. In der Seitenansicht (a) sind die Erhöhungen 6 als Linien dargestellt. Die Erhöhungen 6 wirken praktisch wie Kufen, auf denen das Schneidgut beziehungsweise das Bohrgut entlanggleiten kann. Dies führt zu einer Verminderung der Reibung.

Die Darstellung (c) zeigt den in der Darstellung (a) durch einen Kreis eingeschlossenen Bereich als Ausschnittsvergrößerung. Es ist erkennbar, dass die Vertiefungen 5 kurz vor der dem Schneidbereich 3 abgewandten Seite des Schneidelements 4 ausebnen, das heißt, in eine zylindrische Innenform übergehen.

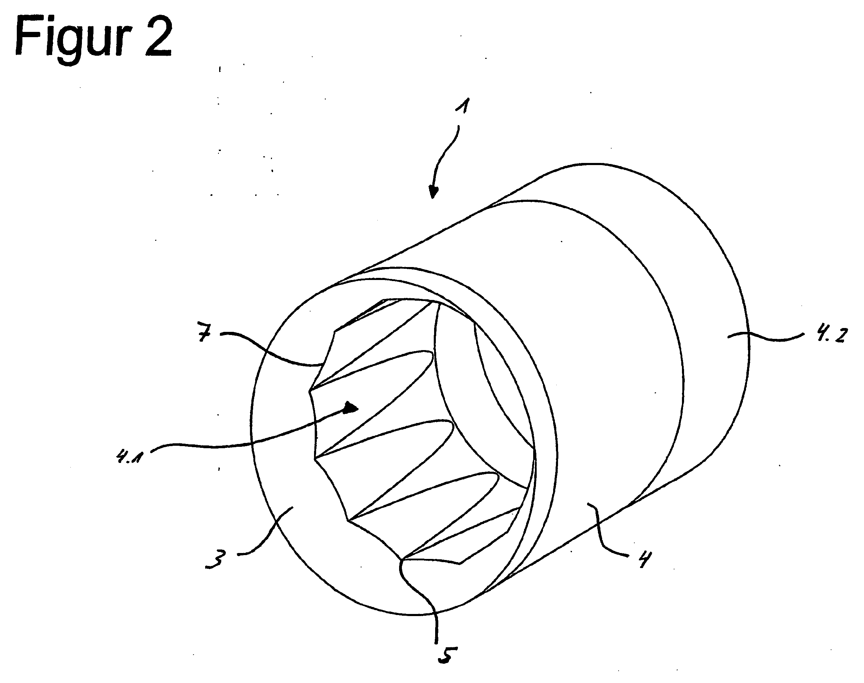

Figur 2 zeigt eine weitere Ausgestaltung eines Schneidelements 1. Das Schneidelement 1 setzt sich aus einem vorzugsweise konischen Schneidbereich 3 und einem im Wesentlichen zylinderförmigen Bereich 4 zusammen. Der zylinderförmige Bereich weist auf der Innenseite in Umfangsrichtung in einem Abstand angeordnete, in Richtung des Schneidbereichs sich öffnende Vertiefungen 5 auf. Die Abstände zwischen den Vertiefungen 5 sind vorzugsweise gleich bemessen. Die Vertiefungen 5 sind über Kanten 7, die eben, konkav, konvex oder wellenförmig geformt sein können, miteinander verbunden. Der zylinderförmige Bereich 4 weist in einem ersten Teilbereich 4.1 also eine mehrkantige Innenform auf. Diese mehrkantige Innenform geht vorzugsweise konisch in einen Teilbereich 4.2 mit einer zylindrischen Innenform über. Bei diesem Übergang verringert sich vorzugsweise der Durchmesser des zylinderförmigen Bereichs 4. Der gesamte im Wesentlichen zylinderförmige Bereich 4 kann konisch verlaufen. Es kann aber auch nur der Teilbereich 4.1 konisch verlaufen und der Teilbereich 4.2 kann einen gleichbleibenden Durchmesser aufweisen oder vice versa. Die mehrkantige Innenform und/oder der konische Verlauf bewirken einen geringen Reibungskoeffizienten auf der Innenseite des Schneidelements 1.

In den Kanten 7 ist vorzugsweise Schmiermittel eingelagert, welches derart gewählt sein kann, dass es erst bei Überschreitung einer bestimmten Grenztemperatur flüssig wird.

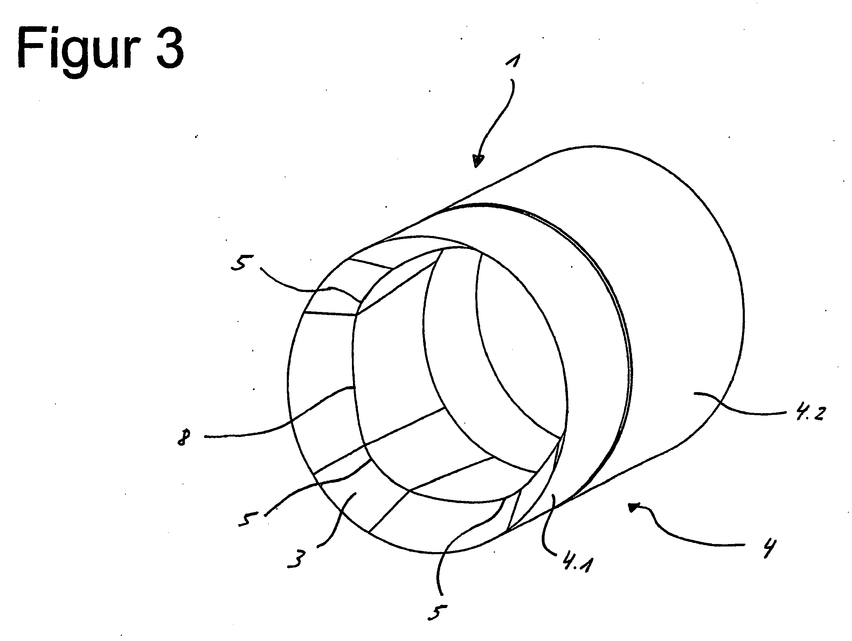

Figur 3 zeigt eine perspektivische Darstellung einer weiteren Ausführungsform eines Schneidelements 1 mit einem vorzugsweise konischen Schneidbereich 3 und einem sich an den Schneidbereich 3 anschließenden im Wesentlichen zylinderförmigen Bereich 4. Der zylinderförmige Bereich 4 weist Vertiefungen 5 auf, die helixförmig auf der Innenseite des Bereichs 4 verlaufen. Die Vertiefungen 5 können zusätzlich zumindest teilweise in axialer Richtung verlaufen. Ferner können die Vertiefungen 5 miteinander zu einer einzigen helixförmigen Vertiefung 5 verbunden sein. Die Vertiefungen 5 sind vorzugsweise in einem ersten Teilbereich 4.1 des zylinderförmigen Bereichs 4 angeordnet, an den sich auf dem dem Schneidbereich 3 entgegengesetzten Ende ein zweiter Teilbereich 4.2 anschließt, der vorzugsweise eine zylindrische Innenform aufweist. Der Teilbereich 4.1 mit den Vertiefungen 5 geht vorzugsweise konisch in den zylindrischen Teilbereich 4.2 über, wobei sich der Durchmesser des Teilbereichs 4.1 verringert. Der Teilbereich 4.2 kann ebenfalls konisch ausgeführt sein.

Die helixförmige Ausgestaltung der Vertiefungen 5 führt zu einer entsprechenden Ausgestaltung von Erhöhungen auf der Innenseite des zylinderförmigen Bereichs 4 und auf diese Weise zu einer Verlagerung von Höhenlinien auf der Innenseite. Durch diese Erhöhungen 8 wird das Schneidgut bei einem Schneidvorgang vorzeitig geformt. Dies führt zu einer Verringerung der auftretenden Axialdrücke. Durch die Vorgabe der Erhöhungen beziehungsweise der durch die Vertiefungen definierten Höhenlinien kann eine definierte Verformung beziehungsweise Faltenlegung des Schneidguts eingeleitet werden.

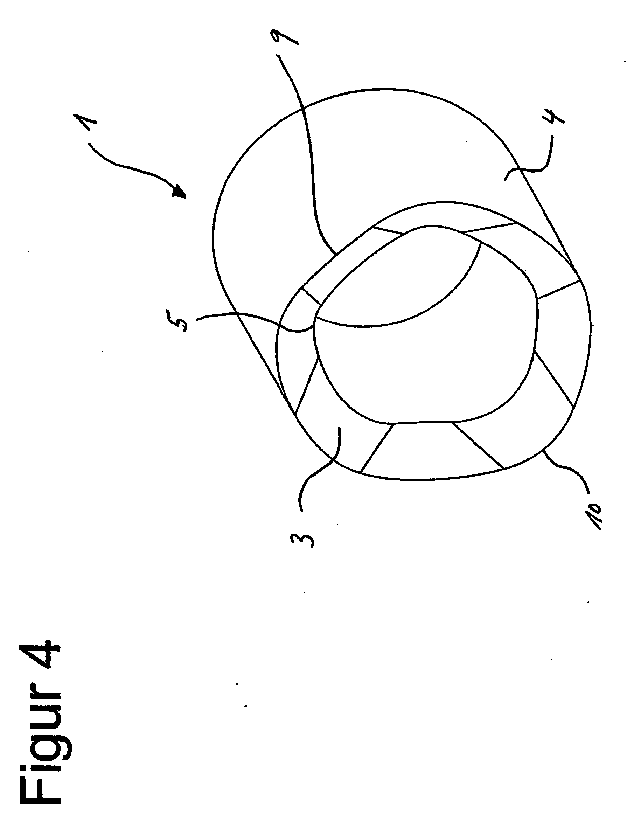

Figur 4 zeigt eine weitere perspektivische Ausgestaltung eines Schneidelements 1 mit einem vorzugsweise konischen Schneidbereich 3 und einem im Wesentlichen zylinderförmigen Bereich 4. Die dargestellte Ausführungsform unterscheidet sich von den in den Figuren 1 bis 3 dargestellten Ausführungsformen insbesondere dadurch, dass der Schneidbereich 3 Vertiefungen 9 aufweist. Zusätzlich zu den Vertiefungen 9 des Schneidbereichs kann auch der zylindrische Bereich 4 insbesondere die in den Figuren 1 bis 3 dargestellten Vertiefungen 5 aufweisen. Die Vertiefungen 9 haben vorzugsweise einen helixförmigen Verlauf und können, wenn sie aneinander angrenzend angeordnet sind, eine einzige helixförmige Vertiefung 9 bilden. Durch die Vertiefungen 9 werden Erhöhungen 10 gebildet, die Schneidgutverformungen bewirken und somit beim Schneiden auftretende Axialdrücke minimieren können.

Diese Ausführungsform ist besonders für das Schneiden von Gummi und weichen Werkstoffen geeignet.

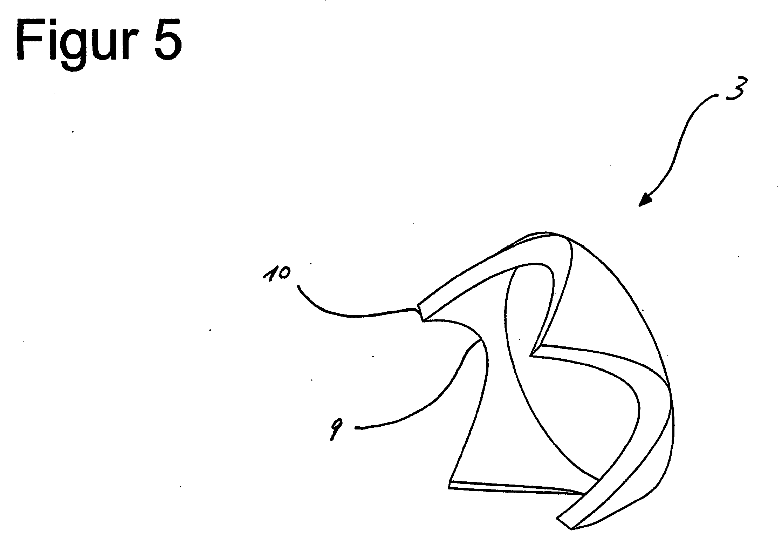

In Figur 5 ist eine weitere Ausführungsform eines Schneidbereichs 3 eines Schneidelements dargestellt. Der Schneidbereich 3 weist konkave Vertiefungen 9 auf, zwischen denen jeweils eine zackenförmig ausgebildete Erhöhung 10 angeordnet ist. Diese Ausgestaltung des Schneidbereichs 3 ermöglicht ein gutes Eindringen des Schneidelements in das zu schneidende Material. Sie lässt sich mit den in den Figuren 1 bis 3 dargestellten Ausführungsformen kombinieren.

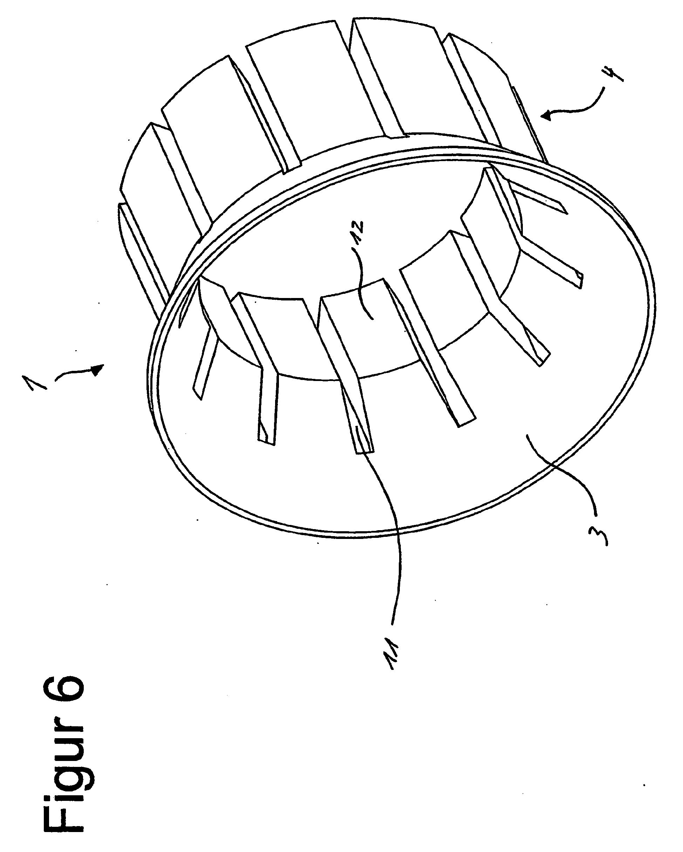

In Figur 6 ist eine weitere Ausführungsform eines Schneidelements 1 dargestellt. Auch hier weist das Schneidelement 1 einen vorzugsweise konischen Schneidbereich 3 und einen an den Schneidbereich 3 angrenzenden, im Wesentlichen zylinderförmigen Bereich 4 auf. Der zylinderförmige Bereich 4 weist Vertiefungen auf, die als Einschnitte beziehungsweise Schlitze 11 ausgeformt sind. Die Schlitze 11 sind vorzugsweise auf der Außenseite des zylinderförmigen Bereichs 4 offen, das heißt, sie reichen bis auf die Außenseite des Schneidelements 1. Die Einschnitte 11 sind vorzugsweise mit einem Abstand zueinander in Umfangsrichtung an der Innenseite des zylinderförmigen Bereichs 4 angeordnet und verlaufen vorzugsweise in axialer Richtung. Sie sind über Wandsegmente 12, die auch als Zungen bezeichnet werden, miteinander verbunden. Die Wandsegmente 12 können eine ebene oder eine gewölbte Oberfläche aufweisen. Die Einschnitte 11 können bis in den Schneidbereich 3 hineinragen.

Das in der Figur 6 dargestellte Schneidelement 1 stellt ein auswechselbares Schneidelement dar, das ohne eine dauerhafte Verbindung -zum Beispiel mittels Lösens, Klebens beziehungsweise Schweißens- in einem Schneidenträger befestigt werden kann. Wenn das Schneidelement stumpf geworden ist oder das Schneidgut geändert wird, kann die Schneide durch Herausziehen aus dem Schneidenträger ausgewechselt werden.

Das Schneidelement 1 wird in einen Schneidenträger hineingeschoben und die Zungen 12 werden durch das Schneidgut nach außen und somit gegen den Schneidenträger gepresst. Das Schneidelement 1 wird insbesondere über Klemmkräfte in dem Schneidenträger gehalten.

Kombinationen von den in den Figuren 1 bis 6 dargestellten Ausführungsbeispielen sind möglich. So kann das in Figur 6 dargestellte Schneidelement 1 einen Schneidbereich 3 gemäß den Figuren 4 und 5 aufweisen. Ebenso können die Schlitze 11 der Figur 6 helixförmig verlaufen. Zusätzlich oder alternativ können die Zungen 12 im Sinne der in der Figur 1 dargestellten Ausführungsform nach innen weisend spitz zulaufen.

Bei dem Ausführungsbeispiel gemäß Figur 2 können die Vertiefungen 5 ebenfalls einen helixförmigen Verlauf haben und/oder als Einschnitte ausgeführt sein. Zusätzlich oder alternativ können die Kanten 7 in den Innenraum des zylinderförmigen Bereichs 4 weisende Spitzen aufweisen. Weitere Kombinationen sind möglich.

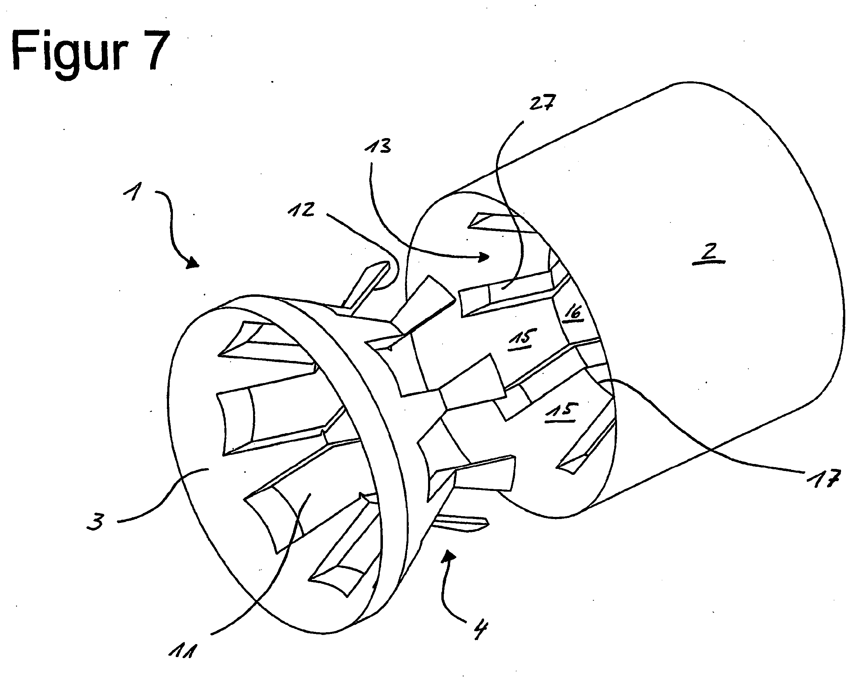

Figur 7 zeigt einen Schneidenträger 2 mit einer Öffnung 13 zur Aufnahme eines der in den Figuren 1 bis 6 dargestellten Schneidelemente. Der dargestellte Schneidenträger 2 ist besonders zur Aufnahme eines auswechselbaren Schneidelements 1 gemäß Figur 6 geeignet. Ein derartiges Schneidelement 1 ist in der Figur 7 kurz vor dem Einsetzen in den Schneidenträger 2 dargestellt. Beim Einführen des Schneidelements 1 in den Schneidenträger 2 wird der Zungen 12 aufweisende zylinderförmige Bereich 4 durch einen ersten sich konisch verengenden Bereich 15, der sich an die Öffnung 13 des Schneidenträgers 2 anschließt, zusammengedrückt. Nachdem ein sich an den konischen verengenden Bereich 15 anschließender Scheitelpunkt 17 überwunden ist, erweitert sich der Durchmesser in einem sich an den Bereich 15 anschließenden weiteren konischen Bereich 16 wieder und die Zungen 12 können sich wieder nach außen bewegen. Durch den Scheitelpunkt 17 wird ein einfaches Herausziehen des Schneidelements 1 verhindert. Es wird eine sogenannte Klick- beziehungsweise Clip-Verbindung zwischen Schneidenträger 2 und Schneidelement 1 geschaffen. Der konisch sich in Gegenrichtung zur Öffnung 13 erweiternde Bereich 16 weist vorzugsweise Schlitze 27 zur Aufnahme der Zungen 12 des zylinderförmigen Bereichs 4 des Schneidelements 1 auf. Auf diese Weise wird Verdrehsicherheit gewährleistet.

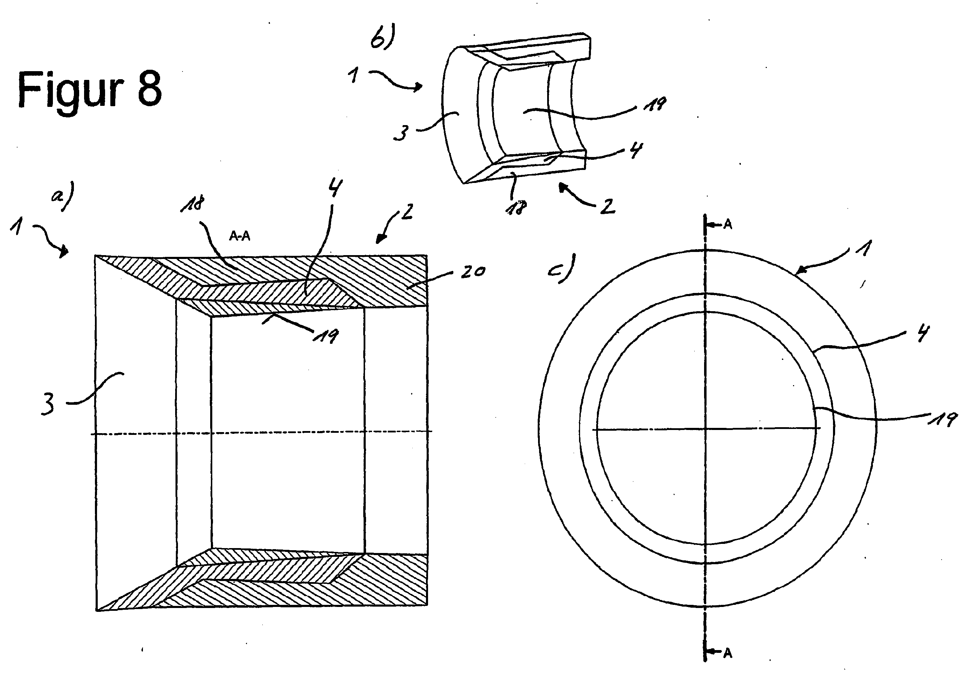

Figur 8 zeigt eine weitere Ausführungsform eines Schneidenträgers 2 und eines Schneidelements 1 in hier als Seitenansicht (a) bezeichneter Längsschnittdarstellung, perspektivischer Teildarstellung (b) und Draufsicht (c). Das Schneidelement 1 besteht aus einem Schneidbereich 3 und einem im Wesentlichen zylinderförmigen Bereich 4. Der im Wesentlichen zylinderförmige Bereich 4 weist vorzugsweise auf seiner Außenseite einen konischen Verlauf auf, der zu einer Vergrößerung des Außendurchmessers in Gegenrichtung zum Schneidbereich 3 führt. Zur Aufnahme des zylindrischen Bereichs 4 des Schneidelements 1 weist der Schneidenträger 2 einen konisch ausgeführten Bereich 18 auf, bei dem sich der Konuswinkel in Gegenrichtung zur Öffnung für das Schneidelement 1 öffnet. Der Konuswinkel beträgt vorzugsweise 2° bis 3°. Die Außenseite des zylinderförmigen Bereichs 4 verläuft vorzugsweise unter dem gleichen Winkel. Der Außendurchmesser des Schneidbereichs 3 kann dem Außendurchmesser des Schneidenträgers 2 entsprechen. Das dem Schneidbereich 3 zugewandte Ende des zylindrischen Bereichs 4 weist vorzugsweise einen Außendurchmesser auf, der in etwa dem Innendurchmesser des schneidbereichseitigen Endes des Schneidenträgers 2 entspricht. Der Außendurchmesser des zylinderförmigen Bereichs 4 auf der dem Schneidbereich 3 entgegengesetzten Seite entspricht vorzugsweise ebenfalls in etwa dem Innendurchmesser auf dem dem Schneidbereich 3 entgegengesetzten Ende des konisch ausgeführten Bereichs 18 des Schneidenträgers 2. Weiterhin sind der zylinderförmige Bereich 4 des Schneidelements 1 und der konisch ausgeführte Bereich 18 des Schneidenträgers in etwa gleich lang. Durch diese Ausgestaltung kann eine formschlüssige Verbindung zwischen Schneidenträger 2 und Schneidelement 1 bewirkt werden. Ein einfaches Herausziehen des Schneidelements 1 wird dadurch verhindert.

An dem vom Schneidbereich 3 entfernten Ende des konischen Bereichs 18 des Schneidenträgers 2 schließt sich ein vorzugsweise zylinderförmiger Bereich 20 an, dessen Durchmesser vorzugsweise kleiner ist als der Außendurchmesser des zylinderförmigen Bereichs 4 des Schneidelements 1.

Der dargestellte Schneidenträger 2 ist insbesondere zur Aufnahme einer wechselbaren Schneide geeignet, wie sie beispielsweise in Figur 6 dargestellt ist. Um ein Verdrehen des Schneidelements 1 in dem Schneidenträger 2 zu verhindern, können Erhöhungen auf der Innenseite des konischen Bereichs 18 des Schneidenträgers 2 vorgesehen sein, die der Aufnahme der zwischen den Zungen 12 vorgesehenen Schlitze 11 dienen. Innerhalb des zylinderförmigen Bereichs 4 des Schneidelements 1 kann ein vorzugsweise zylinderförmiger Ring, insbesondere ein Stahlring, vorgesehen sein. Der Ring 19 dient einer Verstärkung der Andruckkraft, die vom Schneidgut auf die Zungen 12 beziehungsweise den zylinderförmigen Bereich 4 ausgeübt wird.

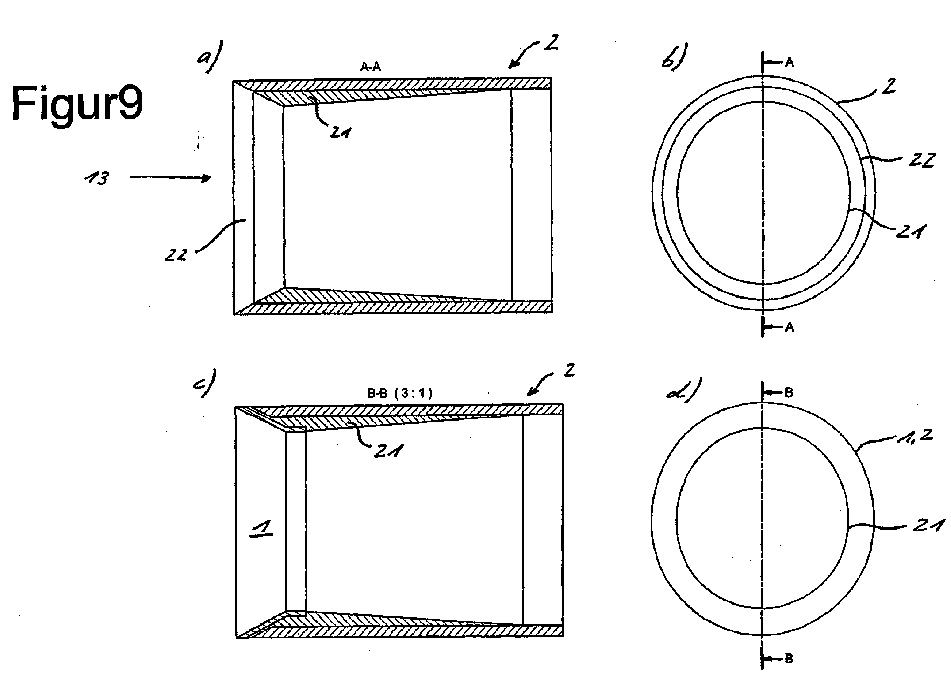

Der in der Figur 9 (a) und (b) in Seitenansicht und Draufsicht dargestellte Schneidenträger 2 weist vorzugsweise eine beispielhaft dargestellte, konisch ausgeführte Innenbeschichtung 21 auf. Der Durchmesser der konischen Innenbeschichtung 21 vergrößert sich vorzugsweise in Gegenrichtung zur Öffnung 13, die der Aufnahme eines Schneidelements 1 dient.

In Figur 9 (c) und (d) ist ein Schneidenträger 2 gemäß der Figur 9 (a) und (b) in Seitenansicht und Draufsicht dargestellt, bei dem in die Innenbeschichtung 21 ein Schneidelement 1 formschlüssig eingebracht ist. Das Einbringen des Schneidelements kann beispielsweise dadurch erfolgen, dass ein Klebstoff sowohl die Rolle der Innenbeschichtung 21 übernimmt, als auch der Adaption des Schneidelements 1 dient. Die Haltekräfte von dem Schneidelement 1 zur Innenbeschichtung 21, die vorzugsweise einen Klebstoff umfasst, können unter anderem dadurch erhöht werden, dass das Schneidelement 1 nicht dargestellte Zungen aufweist, die sich in Längsrichtung erstrecken und in deren Zwischenräumen sich die vorzugsweise einen Klebstoff umfassende Innenbeschichtung 21 einlagern kann.

Die Wahl des Beschichtungsmaterials der Innenbeschichtung 21 richtet sich grundsätzlich nach dem zu schneidenden Bohrgut. Üblicherweise werden die Innenbeschichtungen durch niedrig schmelzendes Lot und/oder Kunststoff, insbesondere mittels Kunststoffspritzen, und/oder aushärtende Klebstoffe und/oder Lacke realisiert.

Für die Außenbeschichtung des Schneidelements 3 beziehungsweise des Hohlbohrers werden üblichervveise Materialien wie beispielsweise Teflon, Titannitrit, sogenannten TiAIN, und/oder Hartmetallbeschichtungen beziehungsweise Hartstoffbeschichtungen eingesetzt. Es können gängige Schneidwerkstoffe und Hartstoffbeschichtungen eingesetzt werden. Besonders bevorzugt werden Diamantbeschichtungen und/oder Beschichtungen, die auf Bornitrit basieren, verwendet. Bevorzugterweise werden einkristalline Diamantbeschichtungen verwendet. Die Diamantschichten können im Detonationsbeschichtungsverfahren aufgebracht werden. Die aufgezählten Materialien können auch für eine auf der Innenseite des Schneidelements 3 vorgesehene Beschichtung eingesetzt werden.

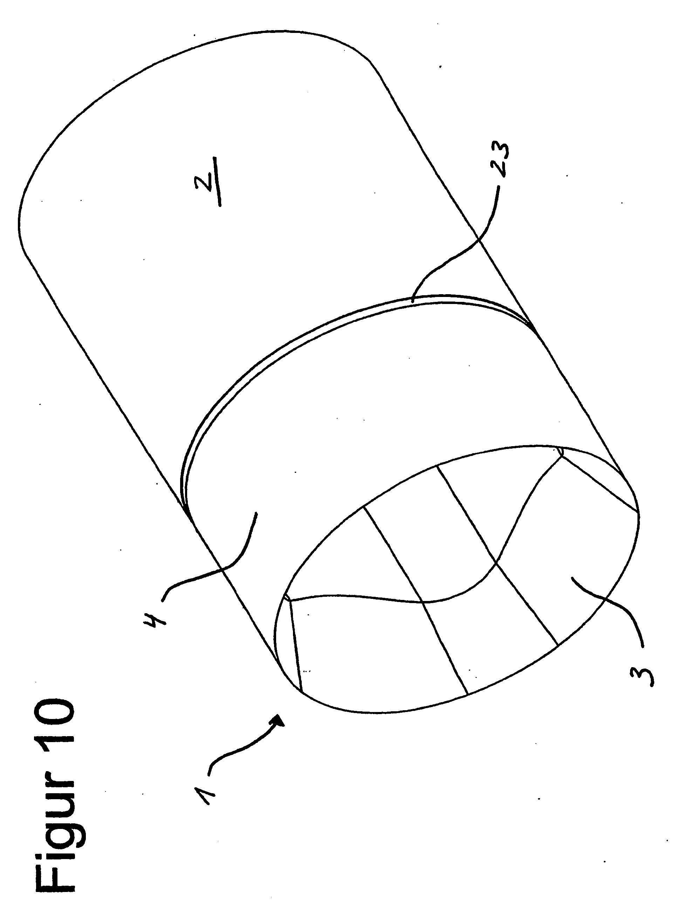

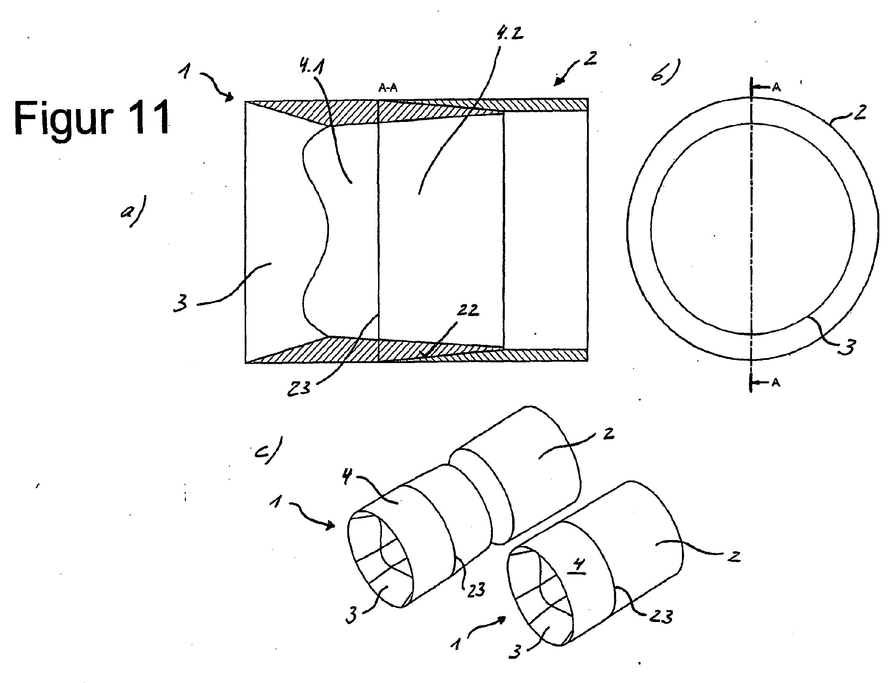

Soll eine dauerhafte Verbindung von Schneidenträger und Schneidelement bewirkt werden, so weist der Schneidenträger 2, wie in den Figuren 10 und 11 dargestellt, auf seiner Innenseite vorzugsweise eine konisch geformte Fügestelle 22 auf, deren Radius sich schneidbereichseitig vergrößert. Darstellung (a) zeigt eine Seitenansicht, Darstellung (b) eine Draufsicht der Verbindungsstelle. Entsprechend weist, wie aus Figur 11 ersichtlich, das Schneidelement 1 in dem im Wesentlichen zylinderförmigen Bereich 4 auf der Außenseite einen konisch sich verengenden Bereich 4.2 auf, dessen Konuswinkel dem der Fügestelle 22 entspricht. Die Länge des konusförmigen Bereichs 4.2 des Schneidelements entspricht vorzugsweise in etwa der Länge der Fügestelle 22 des Schneidenträgers. Darstellung (c) zeigt die in den Figuren 10 und 11 (a) und (b) gezeigten Schneidenträger und Schneidelemente vor (linke Abbildung) und nach (rechte Abbildung) dem Zusammenfügen.

Der im Wesentlichen zylinderförmigen Bereich 4 des Schneidelements 1 kann wie in den Figuren 1 bis 6 und 8 dargestellt ausgeführt sein.

Schneidelement 1 und Schneidenträger 2 können durch eine selbsthemmende Klemmverbindung; durch Klebung, Löten und/oder Lasern beziehungsweise Laserschweißen miteinander verbunden werden. Mischformen der Verbindungstechniken sind denkbar. Beim Kleben beziehungsweise Löten wird auf der Fügestelle 22 Klebstoff beziehungsweise Lot angebracht. Für eine alternative oder zusätzliche Laserverbindung werden das Schneidelement 1 und der Schneidenträger 2 an einer Fügelinie 23 zusammengeschweißt, die vorzugsweise dem schneidbereichseitigen Ende des Schneidenträgers entspricht. Die Wahl des Verbindungsverfahrens hängt von den verwendeten Materialien und den zu berücksichtigenden Kosten ab. Erfolgt die Verbindung durch Kleben und Laserschweißen, so wird ein Auftreiben des Materials und eine spätere Verdickung vermieden. Beim Löten sind gegebenenfalls noch Nacharbeiten erforderlich.

Durch die konische Ausgestaltung der Fügestelle 22 des Schneidenträgers 2 und des Bereichs 4.2 des Schneidelements 1 wird eine Zentrierung der Bauteile bewirkt. Der Öffnungswinkel, das heißt, der Winkel zwischen den in einer Ebene liegenden Seitenwänden der Fügestelle sollte vorzugsweise kleiner als 60° sein. Da der Konuswinkel, das heißt, der Winkel zwischen Innenwand und Außenwand der Fügestelle 22 klein gehalten ist, treten vorteilhafterweise selbsthemmende Effekte auf, wie dies beispielsweise bei einem Morsekegel der Fall ist.

Die in den Figuren 9 bis 11 dargestellten Beschichtungs- beziehungsweise Verbindungsbeispiele finden selbstverständlich auch auf die in den Figuren 6 bis 8 dargestellten Schneidelemente 1 und Schneidenträger 2 Anwendung. So können bei den Schneidenträgern 2 der Figuren 7 und 8 ebenfalls Beschichtungen vorgesehen sein. Ferner kann der konisch sich erweiternde Bereich 18 der Figur 8 beziehungsweise 16 der Figur 7 mit Klebstoff und/oder Lot versehen sein, um eine dauerhafte Verbindung zusätzlich zu der durch Formschluss beziehungsweise Klemmwirkung bewirkte Verbindung zu erzeugen. Zusätzlich oder alternativ können die in den Figuren 7 und 8 dargestellten Schneidenträger auch durch Laserschweißen mit dem Schneidelement 1 verbunden sein. Bei der Figur 7 könnte eine Schweißnaht beispielsweise auf das schneidelementseitige Ende des konischen Bereichs 15 angebracht werden. Bei der Ausführungsform nach Figur 8 bietet sich eine Schweißnaht in dem nicht näher bezeichneten Übergang zwischen dem Schneidbereich 3 und dem im Wesentlichen zylinderförmigen Bereich 4 an, in dem das schneidelementseitige Ende des konusförmigen Bereichs 18 des Schneidenträgers 2 zur Anlage kommt.

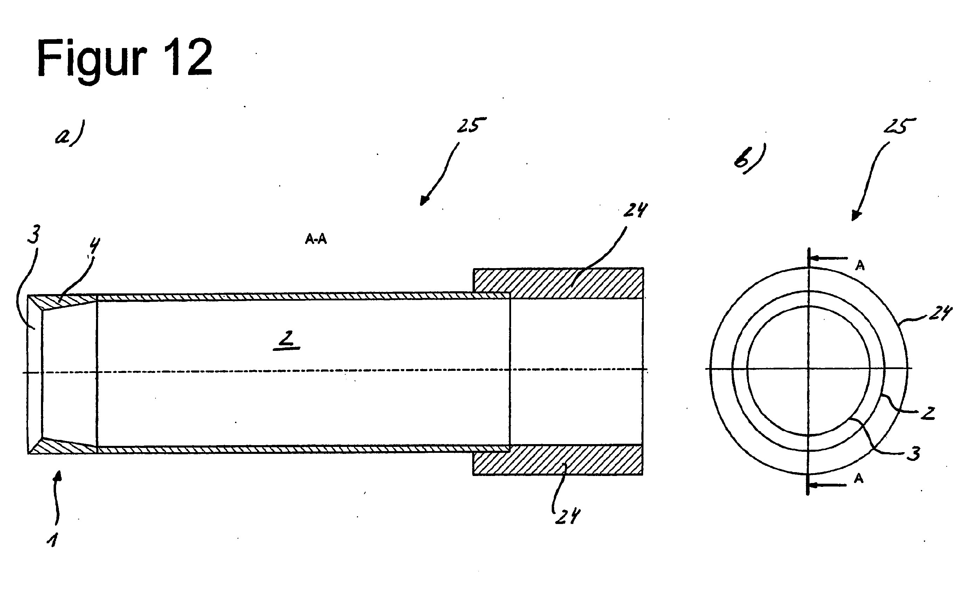

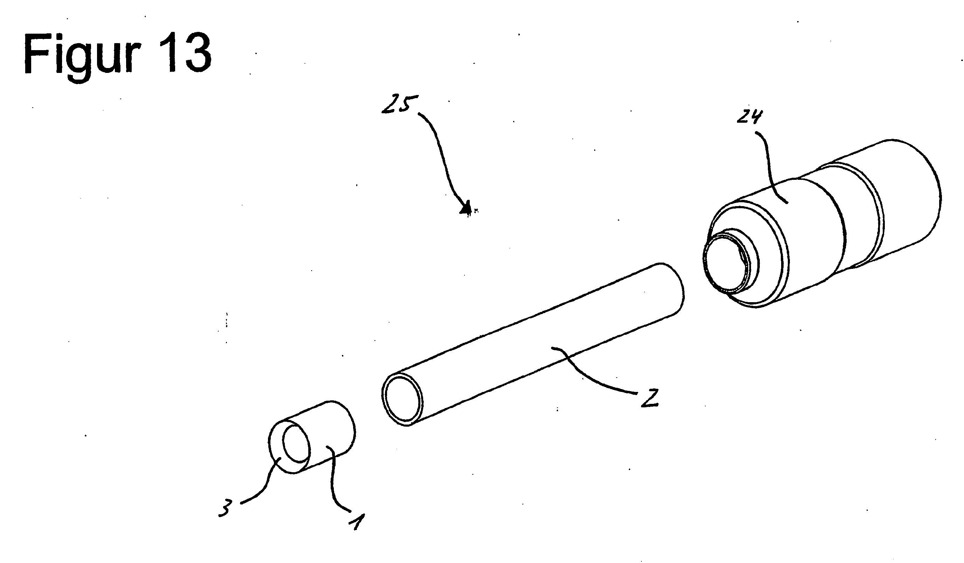

Die Figuren 12 und 13 zeigen einen Hohlbohrer mit einem Schneidelement 1 und einem Schaft 24, die über einen Schneidenträger 2 miteinander verbunden sind, in Seitenansicht (Darstellung 12 (a)) und Draufsicht (Darstellung 12 (b)) und Explosionsdarstellung (Figur 13). Das Schneidelement 1 weist einen Schneidbereich 3 und einen im Wesentlichen zylinderförmigen Bereich 4 auf. Das Schneidelement 1 und der Schneidenträger 2 können wie in den Figuren 1 bis 11 dargestellt ausgeführt sein. Schneidelement 1 und Schneidenträger 2 sind als getrennte Teile ausgebildet. Vorzugsweise ist auch der Schaft 24 als separates Teil ausgeführt. Die Explosionsdarstellung 13 des Hohlbohrers 25 verdeutlicht den Aufbau aus separaten Bauteilen.

Durch den getrennten Aufbau kann bei Wahl von Material und/oder Herstellungsverfahren der spezielle Verwendungszweck des jeweiligen Bauteils berücksichtigt werden. So dient insbesondere der Schaft zum Spannen eines Hohlbohrers in einer Spindel beispielsweise einer Werkzeugmaschine. Der Schaft 24 wird vorzugsweise durch Drehen und/oder Ziehen aus sogenanntem Automatenstahl hergestellt. Dieses Material ist besonders für die Bearbeitung auf Drehmaschinen mit hoher Schnittgeschwindigkeit geeignet. Der Schaft 24 darf relativ weich sein, da er lediglich dem Spannen und der Adaption an verschiedene Spannsysteme dient. Zusätzlich dient er der Aufnahme des Schneidenträgers 2.

Der Schneidenträger 2 wird vorzugsweise aus sogenanntem VA-Stahl (Edelstahl DIN 1.4301) vorzugsweise durch Ziehen erzeugt. Das Material kann zusätzlich veredelt sein. VA-Stahl kennzeichnet sich dadurch aus, dass er nicht rostend und korrosionsbeständig ist. Selbstverständlich können auch andere Werkstoffe eingesetzt werden. Es kann beispielsweise als Schneidenträger 2 ein Kohlenstofffaserrohr eingesetzt werden. Insbesondere muss für den Schneidenträger 2 ein Werkstoff verwendet werden, der eine gute Dauerschwingfestigkeit gewährleistet.

Material und/oder Herstellungsverfahren für das Schneidelement 1 werden hinsichtlich einer Standzeiterhöhung des Schneidelements ausgewählt. Bevorzugterweise besteht das Schneidelement 1 aus einem verschleißfesten Material, insbesondere aus gehärtetem und beschichtetem pulvermetallurgischem Material. Alternativ oder zusätzlich können auch Hartmetalle, Keramiken und/oder Diamantbeschichtungen zum Einsatz kommen. Die innere Ausgestaltung des Schneidelements 1 kann mit einer zusätzliche Beschichtung optimal auf das zu bohrende Schneidgut abgestimmt werden. Die Verwendung einer zusätzlichen Beschichtung ist jedoch nicht zwingend erforderlich. Hierbei kommen insbesondere die inneren Ausgestaltungen gemäß den Figuren 1 bis 6 in Betracht.

Zur Verbindung von Schneidenträger 2 und Schaft 24 können der Schneidenträger 2 auf der Außenseite konisch, sich zur Verbindungsstelle hin verengend und der Schaft 24 an der Innenseite ebenfalls konisch, sich zur Verbindungsstelle hin erweiternd augeführt sein, wobei die Konuswinkel in etwa das gleiche Maß aufweisen. Die Verbindung zwischen Schneidenträger 2 und Schaft 24 kann daher entsprechend der in den Figuren 10 und 11 dargestellten Verbindung erfolgen. Die zu diesen Figuren beschriebenen Verbindungsverfahren sind ebenfalls anwendbar. Eine klebende Verbindung hat den Vorteil, dass kein Wärmeverzug entsteht, es sich um eine kostengünstige Lösung handelt und die Verbindung chemisch innert und den Festigkeitsanforderungen gewachsen ist. Selbstverständlich können die Konuswinkel von Schneidenträger 2 und Schaft 24 auch 0° betragen.

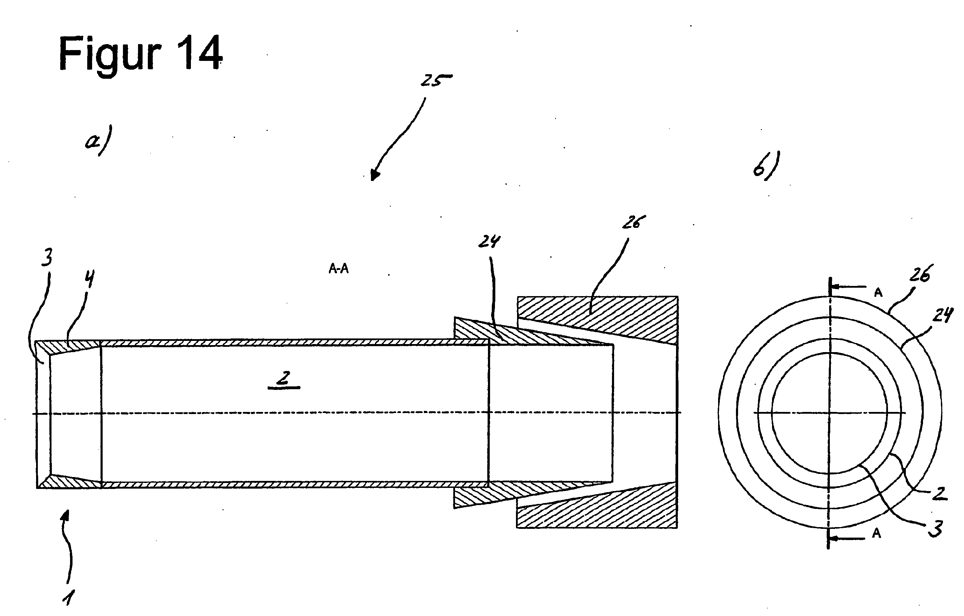

Der Hohlbohrer 25 wird üblicherweise mittels einer Bohrspindel betrieben. Die Bohrspindel weist hierzu eine Öffnung zur Aufnahme des Schafts auf. Zum Halten des Schafts kann die Öffnung ein spezielles Spannfutter aufweisen. Alternativ oder auch zusätzlich können Adapter 26 vorgesehen sein (siehe Figur 14), die der Anpassung des Schaftumfangs an den Durchmesser der Öffnung der Bohrspindel dienen. Darstellung 14 (a) zeigt eine Seitenansicht, Darstellung 14 (b) die entsprechende Draufsicht. Das Vorsehen von Adapter und/oder Spannfutter ist von einer mehrstückigen Ausführung des Hohlbohrers unabhängig.

Sind Schneidenträger 2 und Schaft 24 als getrennte Bauteile ausgeführt, so kann anstelle eines Adapters beziehungsweise dann, wenn in der Bohrspindel kein geeignetes Spannfutter vorgesehen ist, einfach der Schaft gegen einen passenden Schaft 24 ausgetauscht werden. Die separate Ausführung von Schneidenträger 2 und Schaft 24 führt somit zu einem flexibel einsetzbaren Bohrwerkzeug.

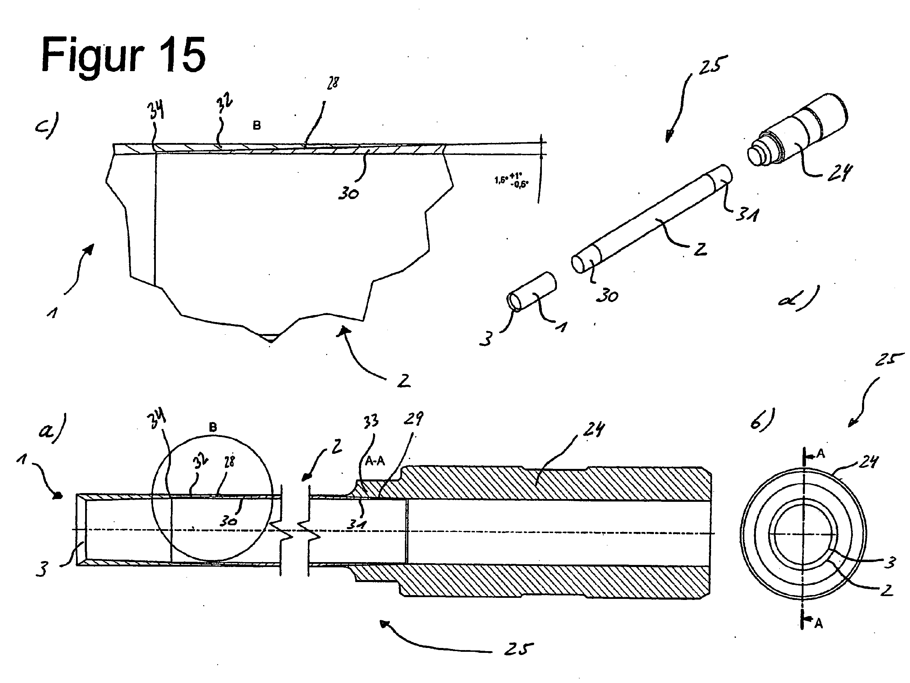

Figur 15 zeigt eine weiteres bevorzugtes Ausführungsbeispiel eines Schneidelements 1, eines Schneidenträgers 2, eines Schafts 24 und eines Hohlbohrer 25 in Seitenansicht (Darstellung (a)), Draufsicht (Darstellung (b)) und Explosionsdarstellung (Darstellung (d)). Darstellung (c) zeigt den in der Darstellung (a) durch einen Kreis eingeschlossenen Bereich als Ausschnittsvergrößerung. Alternativ zu dem in den Figuren 10 und 11 dargestellten Ausführungsbeispiel weist der Schneidenträger 2 auf seiner Außenseite schneidelementseitig einen konisch geformten ersten Fügebereich 30 auf, dessen Radius sich in Richtung zum Schneidelement 1 verkleinert. Der Konuswinkel beträgt vorzugsweise 1,5°. Entsprechend weist das Schneidelement 1 auf seiner Innenseite schneidenträgerseitig einen sich konisch erweiternden Fügebereich 32 auf. Der Konuswinkel des Fügebereichs 32 des Schneidelements 1 ist entsprechend dem Konuswinkel des ersten Fügebereichs 30 des Schneidenträgers 2 gewählt. Die axiale Ausdehnung des ersten Fügebereichs 30 des Schneidenträgers 2 entspricht vorzugsweise der axialen Ausdehnung des Fügebereichs 32 des Schneidelements 1. Der innere Durchmesser des Schneidelements 1 ist bevorzugterweise kleiner als der innere Durchmesser des Schneidenträgers 2, so dass das Schneidgut eine sich gegebenenfalls bildende Kante an der Fügestelle 34 ungehindert passieren kann.

Schaftseitig weist der Schneidenträger 2 auf seiner Außenseite vorzugsweise ebenfalls einen konisch geformten zweiten Fügebereich 31 auf, dessen Radius sich in Richtung zum Schaft 24 verkleinert. Entsprechend weist der Schaft 24 auf seiner Innenseite schneidenträgerseitig einen sich konisch erweiternden Fügebereich 33 auf. Der Konuswinkel des Fügebereichs 33 des Schafts 24 ist entsprechend dem Konuswinkel des zweiten Fügebereichs 31 des Schneidenträgers 2 gewählt. Die axiale Ausdehnung des zweiten Fügebereichs 31 des Schneidenträgers 2 entspricht vorzugsweise der axialen Ausdehnung des Fügebereichs 32 des Schafts 24. Alternativ kann der Schneidenträger schaftseitig auf der Innenseite einen konisch geformten Fügebereich aufweisen, dessen Radius sich in Richtung zum Schaft erweitert, während der Schaft auf der Außenseite schneidenträgerseitig einen sich konisch verengenden Fügebereich aufweist, dessen Konuswinkel dem Konuswinkel des zweiten Fügebereichs des Schneidenträgers entsprechend gewählt ist.

Wie bereits zu den Figuren 10 und 11 ausgeführt, können Schneidelement 1 und Schneidenträger 2 durch eine selbsthemmende Klemmverbindung, durch Klebung, Löten und/oder Lasern beziehungsweise Laserschweißen miteinander verbunden werden. Mischformen der Verbindungstechniken sind denkbar. Dabei werden der erste Fügebereich 30 des Schneidenträgers 2 und der Fügebereich 32 des Schneidelements 1 zu einer Fügestelle 28 zusammengefügt. Mit entsprechenden Verbindungstechniken können der zweite Fügebereich 31 des Schneidenträgers und der Fügebereich 33 des Schafts 24 miteinander zu einer Fügestelle 29 verbunden werden.

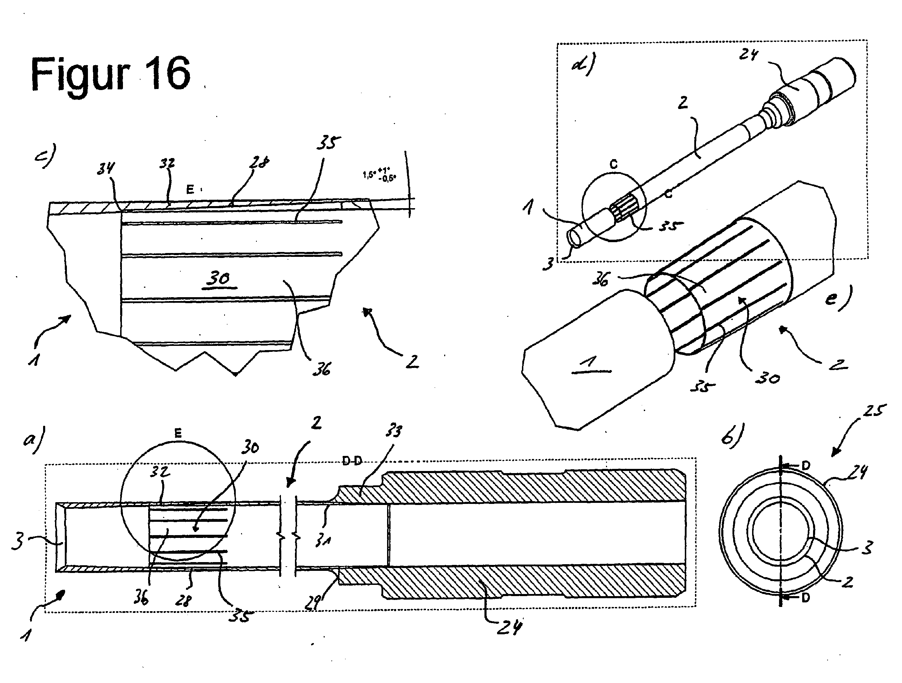

Durch entsprechende Ausgestaltung von Schneidenträger und Schneidelement kann in Analogie zu dem insbesondere in Figur 7 darstellten Ausführungsbeispiel auch bei dem in Figur 15 dargestellten Ausführungsbeispiel eine sogenannte Klick- beziehungsweise Clip-Verbindung zwischen Schneidenträger und Schneidelement beziehungsweise zwischen Schneidenträger und Schaft geschaffen werden. Eine derartige Ausgestaltung für eine Clip-Verbindung zwischen Schneidelement 1 und Schneidenträger 2 ist in Figur 16 dargestellt. Das in der Figur 16 dargestellte Ausführungsbeispiel unterscheidet sich von dem in der Figur 15 dargestellten Ausführungsbeispiel dadurch, dass im ersten Fügebereich 30 des Schneidenträgers 2 axial verlaufende Schlitze 35 vorgesehen sind. Durch die Schlitze 35 werden Zungen 36 gebildet, die beim Einbringen des Fügebereichs 30 des Schneidenträgers 2 in den Fügebereich 32 des Schneidelements 1 zusammengedrückt werden und dadurch eine klemmende Verbindung bewirken. Vorzugsweise ist der Fügebereich 32 des Schneidelements 1 so ausgeführt, dass er eine den Schlitzen 35 und den Zungen 36 entsprechende Gegenkontur aufweist; insbesondere kann sich an einen in Schneidbereichrichtung konisch verengenden Bereich über einen Scheitelpunkt ein konisch erweiternder Bereich anschließen (nicht dargestellt), so dass sich die Zungen 36 in dem sich konisch erweiternden Bereich wieder nach außen bewegen können. Hierdurch entsteht eine so genannte Clipverbindung. Durch den Scheitelpunkt wird ein einfaches Herausziehen des Schneidenträgers beziehungsweise des Schneidelements verhindert. Hierzu weist der sich konisch erweiternde Bereich des Fügebereichs 32 des Schneidelements 1 vorzugsweise Schlitze zur Aufnahme der Zungen 36 des Schneidenträgers 2 auf, so dass Verdrehsicherheit gewährleistet ist. Der zweite Fügebereich 31 des Schneidenträgers und der Fügebereich 33 des Schafts 24 können entsprechend ausgestaltet sein.

Selbstverständlich kann sowohl bei Schneidelement und Schneidenträger als auch bei Schneidenträger und Schaft auf konisch ausgeführte Fügebereiche verzichtet werden, so dass zur Bildung eines Hohlbohrers die Stirnseiten von Schneidelement und Schneidenträger beziehungsweise von Schneidenträger und Schaft zusammengefügt beziehungsweise miteinander verbunden werden.

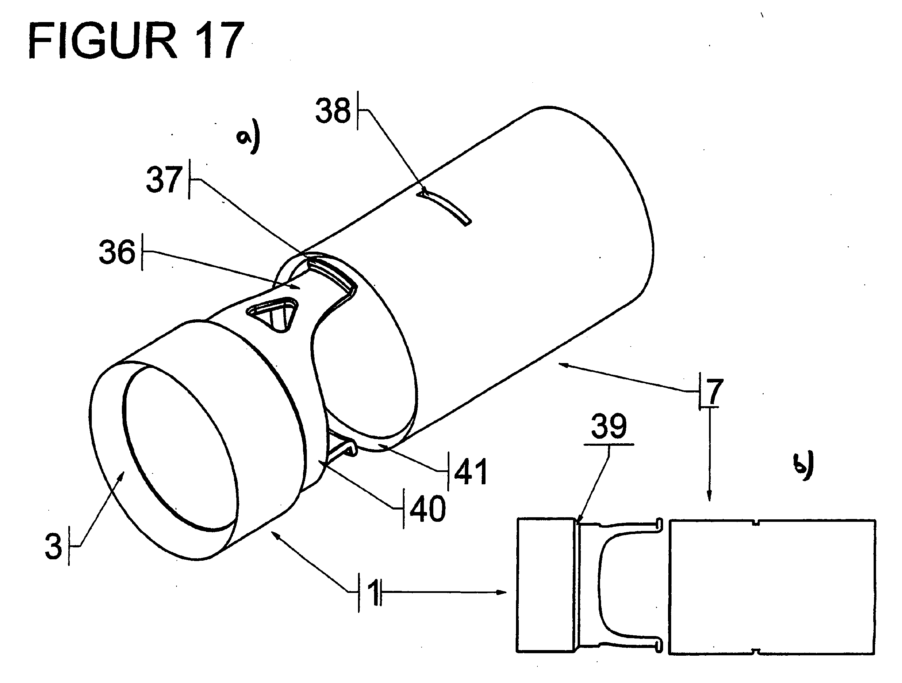

Figur 17 zeigt ein weiteres bevorzugtes Ausführungsbeispiel eines Schneidelements 1 und eines Schneidenträgers 7 und zwar gemäß Darstellung 17a .in Explosionsdarstellung und gemäß Darstellung 17b in Seitenansicht. Das Schneidelement 1 zeichnet sich dadurch aus, dass es lösbar mit dem Schneidenträger verbunden werden kann, nämlich durch Einschieben. Das Schneidelement 1 weist in einem dem Schneidbereich 3 abgewandten Umfangsbereich eine konische Fase 39 auf, die unter einem Winkel von 45° bis 15° auf den Nenninnendurchmesser des Schneidenträgers 7 abfällt. An die Fase 39 schließt sich ein zylindrischer Bereich 40 mit zylindrischer Umfangsfläche an, der so ausgelegt ist, dass er in den Schneidenträger 7 eingeschoben werden kann. Der Schneidenträger weist einen sich in Richtung auf das Schneidelement 1 öffnenden konischen Bereich 41 auf, dessen Neigungswinkel vorzugsweise auf den der konischen Fase 39 abgestimmt ist. Der zylindrische Bereich 40, die konische Fase 39 und der konische Bereich 41 fixieren das Schneidelement 1 im Schneidenträger 7 im Umfangsbereich.

Der zylindrische Bereich 40 weist mindestens eine, vorzugsweise zwei diametral gegenüberliegende Laschen 36 auf, die an ihrem dem Schneidbereich 3 abgewandten Ende verdickt sind, sodass Haltenasen 37 ausgebildet werden. Diese Haltenasen befinden sich nach der Montage des Schneidelements 1 im Schneidenträger 7 in Vertiefungen oder Durchbrüchen 38, die in der Wandung des Schneidenträgers 7 vorgesehen sind. Die Haltenasen haben die Aufgabe, das Schneidelement verliersicher im Schneidenträger zu fixieren und beim Herausziehen des Hohlbohrers aus einem Bohrloch festzuhalten. Sie haben außerdem die Funktion, ein Drehmoment von dem Schneidenträger 7 auf das Schneidelement 1 zu übertagen. Dabei ist zu berücksichtigen, dass die konische Fase 39 und der konische Bereich 41 ebenfalls dazu dienen, einen Drehmoment vom Schneidenträger 7 auf das Schneidelement 1 zu übertragen.

Die Haltenasen wirken mit Durchbrüchen 38 in der Wandung des Schneidenträgers 7 zusammen, wobei die Seitenränder der Durchbrechungen so gewählt sind, dass einerseits axiale Zugkräfte zwischen dem Schneidelement 1 und dem Schneidenträger 7 aufgebaut werden. Diese führen dazu, dass zwischen der konischen Fase 39 und dem konischen Bereich 41 Reibkräfte aufgebaut werden, die die Übertragung eines Drehmoments ermöglichen. Andererseits sind die in Umfangsrichtung gemessenen Ränder der Durchbrüche 38 so gewählt, dass diese an den Haltenasen anliegen. Dadurch wird eine Relativdrehung zwischen dem Schneidelement 1 und dem Schneidenträger 7 verhindert und ein Drehmoment vom Schneidenträger 7 auf das Schneidelement 1 übertragen.

Wenn in der Wandung des Schneidenträgers 7 Durchbrüche 38 für die Haltenasen 37 vorgesehen sind, ist es auf besonders einfache Weise möglich, die Verbindung zwischen Schneidelement und Schneidenträger zu entriegeln und das Schneidelement 1 auszutauschen.

Wird auf die Möglichkeit verzichtet, die Haltenasen 37 durch die Wandung des Schneidenträgers 7 hindurch zu entriegeln, ist es auch möglich, auf der Innenseite des Schneidenträgers lediglich Vertiefungen vorzusehen, in die die Haltenasen 37 eingreifen. Dabei werden die Kanten der Vertiefungen so ausgebildet und gewählt, dass einerseits axiale Zugkräfte zwischen dem Schneidelement 1 und dem Schneidenträger 7 aufgebaut werden, andererseits ein Drehmoment von dem Schneidenträger 7 auf das Schneidelement 1 übertragen werden kann.

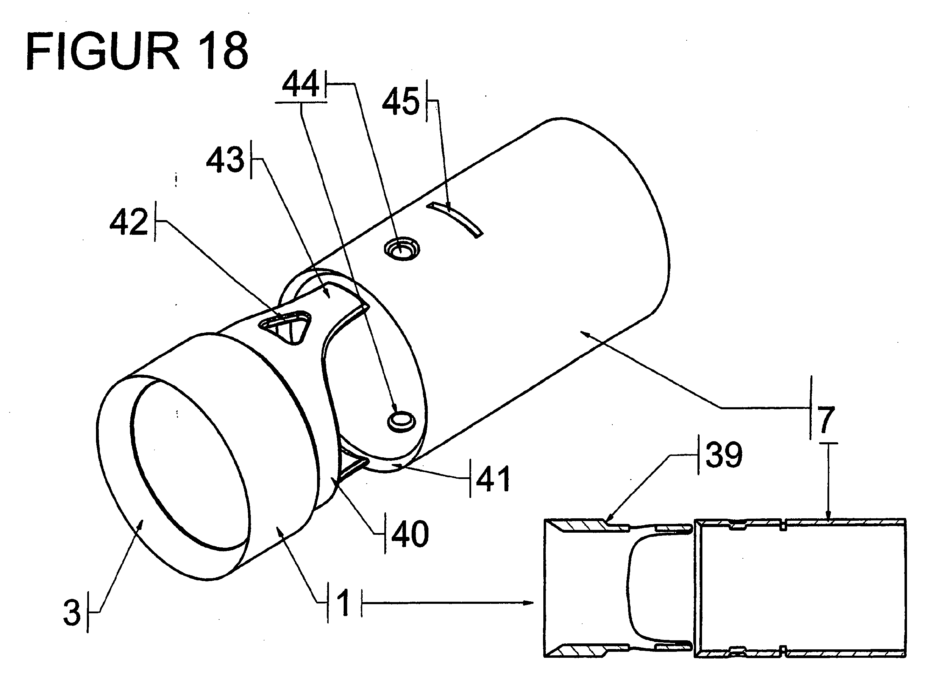

Figur 18 zeigt ein weiteres bevorzugtes Ausführungsbeispiel eines Schneidelements 1 und eines Schneidenträgers 7, wobei Darstellung 18a eine Explosionsdarstellung und Darstellung 18b eine auch hier als Seitenansicht bezeichnete Längsschnittdarsteitung wiedergibt.

Das Schneidelement 1 ist hier wiederum mit einer konischen Fase 39 versehen, die auf einen konischen Bereich 41 am Vorderende des Schneidenträgers 7 abgestimmt ist, wobei die konische Fase 39 vorzugsweise mit 45° bis 15° auf den Nenninnendurchmesser des Schneidenträgers 7 abfällt.

Das Schneidelement 1 ist wiederum lösbar mit dem Schneidenträger 7 verbunden und kann in diesen eingeschoben werden.

An die konische Fase 39 schließt sich ein zylindrischer Bereich 40 an, dessen Außendurchmesser kleiner oder gleich ist wie der Innendurchmesser des Schneidenträgers 7. Er weist wiederum mindestens eine, hier zwei diametral gegenüberliegende Laschen 43 auf, die flach auslaufen, also anders als bei dem Ausführungsbeispiel gemäß Figur 17 keine Verdickungen aufweisen. Die Laschen weisen in ihrem mittleren Bereich Durchbrüche 42 auf, die vorzugsweise dreieckförmig ausgebildet sind, wobei eine Dreieckskante in Umfangsrichtung des Schneidelements 1 verläuft und damit im wesentlichen parallel zu der konischen Fase 39 beziehungsweise zum konischen Bereich 41 angeordnet ist. Die beiden weiteren Schenkel der dreieckförmigen Durchbrüche 42 weisen vom Schneidbereich 3 weg und damit in Richtung auf das Ende der Laschen 43 und in Richtung zum Schneidenträger 7. Die beiden Schenkel schließen vorzugsweise einen Winkel von 60° bis 120° ein.

Auf der Innenfläche des Schneidenträgers 7 ist mindestens im Folgenden als Warze 44 bezeichneter Vorgang vorgesehen. Die Anzahl der Warzen richtet sich vorzugsweise nach der Anzahl der Laschen 43 am Schneidelement 1. Hier sind daher zwei gegenüberliegende Warzen 44 vorgesehen. Die Warzen sind hier von außen in die Wandung des Schneidenträgers 7 eingeprägt beziehungsweise eingedrückt, sodass auf der Umfangsfläche des Schneidenträgers 7 entsprechende Vertiefungen vorhanden sind.

Die Warzen 44 haben die Aufgabe, dass Schneidelement 1 verliersicher am Schneidenträger 7 zu halten. Sie rasten beim Einschieben des Schneidelements 1 in den Schneidenträger 7 in die Durchbrüche 42 ein und halten damit das Schneidelement sicher im Schneidenträger 7.

Durch die Warzen 44 können beim Herausziehen des Hohlbohrers aus einer Bohrung vom Schneidenträger 7 Zugkräfte auf das Schneidelement ausgeübt werden. Außerdem kann ein Drehmoment vom Schneidenträger 7 auf das Schneidelement 1 übertragen werden. Außerdem werden über die konische Fase 39 und den konischen Bereich 41 Drehmomente vom Schneidenträger auf das Schneidelement übertragen.

Die Warzen 44 sind vorzugsweise kreisförmig ausgebildet, können aber auch dreieckig sein, wobei die Flanken der Warzen 44 dann vorzugsweise an die Kontur der Durchbrüche 42 in den Laschen 43 angepasst sind. Sowohl bei kreisrunden als auch bei dreieckigen Warzen 44 ist gewährleistet, dass bei Drehmomenterhöhung die Flächenpressung der konischen Fase 39 und des konischen Bereichs 41 zunimmt, sodass die Betriebssicherheit des Hohlbohrers erhöht wird.

Aus Figur 18 ist ersichtlich, dass die Wandung des Schneidenträgers 7 eine Öffnung 45 aufweist. Diese dient der Demontage des Schneidelements 1: Es ist möglich, durch die Öffnung 45 die Laschen 43 nach innen zu drücken, sodass die Warzen 44 nicht mehrin die Durchbrüche 42 eingreifen und das Schneidelemente 1 aus dem Schneidenträger 7 herausgezogen werden kann.

Aus den Erläuterungen wird deutlich, dass zur Entriegelung der Laschen 43 lediglich auf diese eine radial nach innen wirkende Kraft ausgeübt werden muss. Daher ist die Kontur der Öffnung 45 frei wählbar. In Figur 18 wurde beispielhaft eine langgestreckte rechteckige Öffnung dargestellt, die sich in Umfangsrichtung des Schneidenträgers 7 erstreckt. Es ist aber sehr wohl möglich, hier auch eine runde oder mehreckige Öffnung vorzusehen.

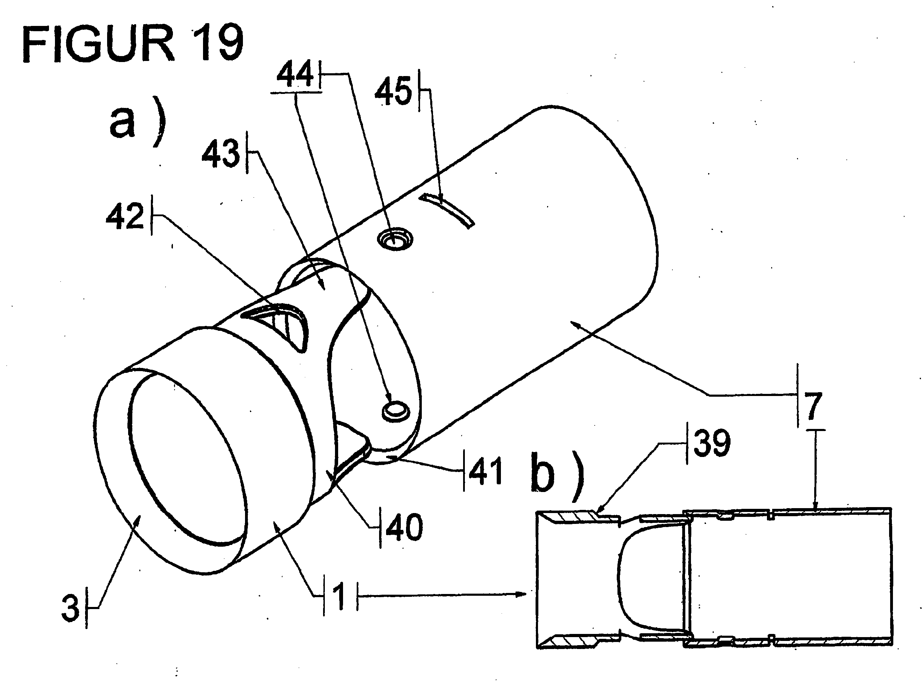

Figur 19 zeigt in Darstellung a) eine perspektivische Explosionsdarstellung und in Darstellung b) eine Seitenansicht eines Ausführungsbeispiels eines Schneidelements 1 und eines Schneidenträgers 7. 18b eine Seitenansicht.

Das Schneidelement 1 zeichnet sich bei diesem Ausführungsbeispiel wiederum dadurch aus, dass es lösbar in den Schneidenträger 7 eingesteckt und mit diesem verbunden werden kann. In einem Abstand zum Schneidbereich 3 ist das Schneidelement mit einer von der Umfangsfläche ausgehenden konischen Fase 39 versehen, die sich vorzugsweise unter einem Winkel von 45° bis 15° auf den Nenninnendruchmesser des Schneidenträgers 7 verjüngt. An die konische Fase 39 schließt sich ein zylindrischer Bereich 40 an, dessen Außendurchmesser kleiner oder gleich ist als/wie der Innendurchmesser des Schneidenträgers 7. Dieser ist an seinem dem Schneidelement 1 zugewandten Ende mit einem konischen Bereich 41 versehen, dessen Neigungswinkel an den der konischen Fase 39 so angepasst ist, dass die konische Fase 39 hier wie bei den oben beschriebenen Ausführungsbeispielen an dem konischen Bereich 41 flächig anliegt.

Der zylindrische Bereich 40 geht in mindestens eine, vorzugsweise zwei einander gegenüberliegende Laschen 43 über, die anders als bei dem Ausführungsbeispiel gemäß Figur 17, am Ende flach ausgebildet sind, also keine Verdickung aufweisen. Die mindestes eine Lasche weist in ihrem mittleren Bereich einen Durchbruch 42 auf, der in seinem der konischen Fase 39 abgewandten Bereich bogenförmig, vorzugsweise kreisbogenförmig, ausgebildet ist, während die gegenüberliegende Längskante des Durchbruchs 42 hier in Umfangsrichtung des Schneidelements 1 verläuft, damit parallel zur konischen Fase 39 beziehungsweise zum konischen Bereich 41.

Die Innenfläche des Schneidenträgers 7 ist mit mindestens einer Warze 44, vorzugsweise zwei einander gegenüberliegenden Warzen 44 versehen. Letztlich ist hier, wie bei dem Ausführungsbeispiel gemäß Figur 18, die Anzahl der Warzen praktisch frei wählbar. Es können auch zwei oder vier Paare einander gegenüberliegender Warzen 44 vorgesehen werden, die dann in die Durchbrüche 42 der Laschen 43 des Schneidelements 1 eingreifen können. Auch die Anzahl der Laschen ist hier - wie bei den in den Figuren 17 und 18 gezeigten Ausführungsbeispielen - frei wählbar. Es können also auch mehr als zwei Laschen vorgesehen werden.

Die Warzen 44 haben auch hier die Aufgabe, das Schneidelement verliersicher im Schneidenträger 7 zu halten, insbesondere beim Zurückziehen des Hohlbohrers Zugkräfte auf das Schneidelement 1 zu übertragen, sodass dieses sicher aus dem Bohrloch herausgezogen werden kann. Außerdem dienen die Warzen 44 dazu, Drehmomentkräfte vom Schneidenträger 7 auf das Schneidelement 1 zu übertragen, wobei auch hier ein Drehmoment von dem konischen Bereich 41 auf die konische Fase 39 übertragen wird.

Die Warzen 44 sind vorzugsweise kreisförmig ausgebildet, können aber auf der dem Schneidelement 1 abgewandten Rückseite mit einer Kontur versehen werden, die an die Kontur der Durchbrüche 42 angepasst ist. Dadurch kann erreicht werden, dass die Rückseite der Warzen 44 flächig an dem kreisbogenförmig ausgebildeten Bereich der Durchbrechung 42 anliegt.

Sollte bei Übertragung eines hohen Drehmoments vom Schneidenträger 7 auf das Schneidelement 1 die Reibung zwischen dem konischen Bereich 41 und der konischen Fase 39 zur Übertragung des Drehmoments nicht ausreichen und eine Relativdrehung zwischen dem Schneidenträger 7 und dem Schneidelement 1 erfolgen, so bewegt sich die Warze 44 auf den bogenförmig ausgebildeten Bereich der Durchbrechung 42, sodass dann quasi ein Keilgetriebe ausgebildet wird, was zu einer Erhöhung der Flächenpressung zwischen dem konischen Bereich 41 und der konischen Fase 39 führt. Die Relativdrehung zwischen Schneidenträger 7 und Schneidelement 1 führt also zu einer Erhöhung der Zugkräfte, die das Schneidelement 1 in den Schneidenträger 7 ziehen und die Flächenpressung an den aneinanderliegenden Flächen (konische Fase 39, konischer Bereich 41) erhöht.

Die Warzen bei den Ausführungsbeispielen gemäß den Figuren 18 und 19 können auf ihrer dem Schneidelement 1 zugewandten Seite abgeflacht sein, sie können also in Richtung auf die Innenfläche des Schneidenträgers 7 abfallen, sodass das Schneidelement 1 leichter in den Schneidenträger 7 eingeführt werden kann: Die Laschen 43 können auf den abfallenden Flanken der Warzen 44 entlang gleiten und nach innen gedrückt werden, bis die Warzen 44 in die Durchbrechungen 42 eingreifen, praktisch einschnappen.

Auch bei dem in Figur 19 dargestellten Ausführungsbeispiel ist vorgesehen, dass die Wandung des Schneidenträgers 7 eine Öffnung 45 aufweist. Durch diese können radial nach innen wirkende Kräfte auf die mindestens eine Lasche 43 ausgeübt werden, sodass diese so weit nach innen gedrückt werden können, dass die Warzen 44 aus den Durchbrechungen 42 heraustreten können, sodass das Schneidelement 1 freigegeben wird.

In Figur 19 ist auch hier lediglich beispielhaft dargestellt, dass die Öffnungen 45 als langgestrecktes Rechteck ausgebildet sind und sich in Umfangsrichtung erstrecken. Auch hier können beispielsweise kreisförmige Öffnungen vorgesehen werden, um Entriegelungskräfte auf die Laschen 43 ausüben zu können.

Aus den Erläuterungen zu den Ausführungsbeispielen gemäß den Figuren 17, 18 und 19 wird deutlich, dass eine lösbare Verbindung zwischen dem Schneidelement 1 und dem Schneidenträger 7 auf einfache Weise realisierbar ist. Dabei können bei durch Art der Verriegelung zusätzliche Drehmomentkräfte übertragen werden: bei dem Ausführungsbeispiel gemäß Figur 17 sind Haltenasen vorgesehen, bei dem Ausführungsbeispiel gemäß den Figuren 18 und 19 ist vorgesehen, dass mindestens eine Warze 44 in eine Durchbrechung eingreift, deren Kontur so ausgebildet ist, dass ein zusätzliches Drehmoment übertragbar ist. Dies erfolgt entweder dadurch, dass die Warze an den Seitenwänden der Durchbrechung 42 anliegt, oder aber dadurch, dass die Durchbrechung eine bogenförmige Kontur aufweist, an der bei einer Relativdrehung zwischen Schneidelement 1 und Schneidenträger 7 die Warze 44 so entlang gleitet, dass zusätzliche Zugkräfte auf das Schneidelement 1 ausgeübt werden, und dessen konische Fase 19 mit erhöhter Kraft an einem konischen Bereich 41 des Schneidenträgers 7 anliegt.

Der Aufbau des Hohlbohrers ist dabei sehr einfach und kostengünstig realisierbar.

Bei der Darstellung der Ausführungsbeispiele gemäß den Figuren 17 bis 19 wurde besonderer Wert gelegt auf die Kopplungsmöglichkeiten zwischen dem Schneidelement 1 und dem Schneidenträger 7. Die genauere Ausgestaltung des Schneidelements 1 und des Schneidenträgers 7, insbesondere der Innenkontur dieser beiden Teile ist aus den Figuren 17 bis 19 nicht ersichtlich. Es sei hier ausdrücklich darauf verwiesen, dass alle Ausgestaltungsmöglichkeiten, die anhand der Figuren 1 bis 16 erläutert wurden, auch hier bei den Ausführungsbeispielen nach den Figuren 17 bis 19 realisierbar sind.

## Patentansprüche

1. Schneidelemente für einen Hohlbohrer mit einem Schneidbereich (3) und einem im wesentlichen zylinderförmigen Bereich (4, 4.1, 4.2), der auf der Innenseite in - vorzugsweise regelmäßigen - Abständen angeordnete, in Richtung des Schneidbereichs (3) sich öffnende Verriefungen (5) aufweist, wobei der im wesentlichen zylinderförmige Bereich (4, 4.1, 4.2) eine mehrkantige Innenform aufweist **dadurch gekennzeichnet, dass** die Kanten (7) über je eine Vertiefung (5) miteinander verbunden sind, und mehrkantige Innenform an der dem Schneidbereich gegenüberliegenden Seite konisch in eine zylindrische Innenform (4.2) übergeht.

2. Schneidelement nach Anspruch 1, **dadurch gekennzeichnet** durch, dass die Vertiefungen (5) in axialer Richtung verlaufen.

3. Schneidelement nach Anspruch 1 oder 2, **dadurch gekennzeichnet, dass** die Vertiefungen (5) in Umfangsrichtung in einem Abstand zueinander angeordnet sind.

4. Schneidelement nach Anspruch 1 oder 2, **dadurch gekennzeichnet, dass** die Vertiefungen (5) helixförmig auf der Innenseite des im wesentliche zylinderförmigen Bereichs (4, 4.1, 4.2) verlaufen.

5. Schneidelement nach einem der vorhergehenden Ansprüche, **dadurch gekennzeichnet, dass** das Schneidelement (1) aus Hartmetall und/oder Keramik besteht und/oder Diamantbeschichtungen aufweist.

6. Schneidelement nach einem der vorherigen Ansprüche, da-durch **gekennzeichnet**, dass der Schneidbereich (3) zusätzliche Vertiefungen (9) aufweist, die vorzugsweise helixförmig verlaufen.

7. Schneidelement nach einem der vorhergehenden Ansprüche, **dadurch gekennzeichnet, dass** in den im wesentlichen zylinderformigen Bereich (4, 4.1 , 4.2) ein Schmiermittel, insbesondere innerhalb der Vertiefungen (5), eingelagert ist.

8. Schneidelement nach Anspruch 7, **dadurch gekennzeichnet, dass** das Schmiermittel bei Überschreitung einer bestimmten Grenztemperatur in flüssigen Zustand übergeht.

9. Schneidelement nach einem der vorhergehenden Ansprüche, **dadurch gekennzeichnet, dass** die Vertiefungen (5) als Einschnitte (11) ausgeführt sind.

10. Schneidelement nach Anspruch 9, **dadurch gekennzeichnet, dass** in dem im wesentlichen zylinderförmigen Bereich (4, 4.1 , 4.2) ein vorzugsweise zylinderfömiger Ring (19) angeordnet ist.

11. Schneidelement nach einem der vorhergehenden Ansprüche, **gekennzeichnet durch** mindestens eine Lasche (36, 43), die auf der dem Schneidbereich (31) abgewandten Seite des Schneidelements (1) entspringt und in einen Schneidenträger (7) einführbar ist.

12. Schneidelement nach Anspruch 11, **dadurch gekennzeichnet, dass** die mindestens eine Lasche (36, 43) eine Halteeinrichtung aufweist.

13. Schneidelement nach Anspruch 11 oder 12, **dadurch gekennzeichnet, dass** die mindestens eine Lasche (36, 43) eine Vertiefung oder Ausnehmung aufweist, in die ein Vorsprung eingreifen kann, der von der Innenseite des Schneidenträgers (7) ausgeht.

14. Schneidelement nach Anspruch 13 **dadurch gekennzeichnet, dass** die Vertiefung oder Ausnehmung eine im wesentlichen dreieckige Kontur aufweist.

15. Schneidelement nach Anspruch 14 **dadurch gekennzeichnet, dass** die Vertiefung oder Ausnehmung eine gekrümmte Kontur aufweist, die - vom Schneidbereich (3) ausgesehen - konkav ausgebildet ist und als Anlagefläche für den Vorsprung des Schneidenträgers (7) dient.

16. Schneidelement nach Anspruch 15, **dadurch gekennzeichnet, dass** die Kontur so angeordnet und auf den Vorsprung abgestimmt ist, dass bei einer Relativdrehung zwischen Schneidelement (1) und Schneidenträger (7) die in axialer Richtung wirken den Spannkräfte zwischen diesen Teilen zunehmen.

17. Schneidenträger für ein Schneidelement nach einem der Ansprüche 1 bis 16, der eine Öffnung (13) für das Schneidelement (1) aufweist, **gekennzeichnet durch** einen konisch ausgeführten Bereich (16, 18), bei dem sich der Konuswinkel in Gegenrichtung zur Öffnung (13) für das Schneidelement (1) öffnet, und Erhöhungen im konischen Bereich zur Aufnahme der Vertiefungen (5, 11) des Schneidelements (1).

18. Schneidenträger nach Anspruch 17, **dadurch gekennzeichnet, dass** das der Konuswinkel 1° bis 6° beträgt.

19. Schneidenträger nach Anspruch 17 oder 18, **dadurch gekennzeichnet, dass** sich in Gegenrichtung zur Öffnung (13) für das Schneidelement (1) an den konisch ausgeführten Bereich (16, 18) ein zylinderförmiger Bereich (20) anschließt, der vorzugsweise einen kleineren Durchmesser aufweist als der konisch ausgeführte Bereich (16, 18) an der Stelle, an welcher er am weitesten von der Öffnung (13) für das Schneidelement (1) entfernt ist.

20. Schneidenträger nach einem der Ansprüche 17 bis 19 **gekennzeichnet durch** mindestens eine Vertiefung oder Ausnehmung in der Wandung, in die eine Halteeinrichtung des Schneideelemencs (1) eingreift.

21. Schneidenträger nach den Ansprüchen 17 bis 20 **gekennzeichnet durch** mindestens eine Durchbrechung, **durch** die die mindestens eine Lasche des Schneidelements (1) mit einer Entriegelungskraft beaufschlagbar ist.

22. Hohlbohrer mit einem Schneidelement nach einem der Ansprüche 1 bis 16 und einem Schneidenträger, insbesondere nach einem der Ansprüche 17 bis 21, wobei Schneidelement (1) und Schneidenträger (7) als separate Bauteile ausgeführt sind.

## Claims

1. A cutting element for a hollow drill having a cutting portion (3) and a substantially cylindrical portion (4, 4.1, 4.2) which on its inner side has recesses (5) arranged at - preferably regular - distances and opening towards the cutting portion (3), said substantially cylindrical portion (4, 4.1, 4.2) having a multi-edged inner shape, **characterized in that** the edges (7) are interconnected by one recess (5) each and that on the side opposite from the cutting portion the multi-edged inner shape changes gradually and conically into a cylindrical inner shape (4.2).

2. A cutting element according to claim 1, **characterized in that** the recesses (5) extend in an axial direction.

3. A cutting element according to claim 1 or 2, **characterized in that** the recesses (5) are arranged at a distance from each other in a circumferential direction.

4. A cutting element according to claim 1 or 2, **characterized in that** the recesses (5) extend helically on the inner side of the substantially cylindrical portion (4, 4.1, 4.2).

5. A cutting element according to any of the preceding claims, **characterized in that** the cutting element (1) is made of hard metal and/or ceramics and/or has diamond coatings.

6. A cutting element according to any of the preceding claims, **characterized in that** the cutting portion (3) has additional recesses (9) which preferably extend helically.

7. A cutting element according to any of the preceding claims, **characterized in that** a lubricant is contained in the substantially cylindrical portion (4, 4.1, 4.2), particularly within the recesses (5).

8. A cutting element according to claim 7, **characterized in that** the lubricant assumes the liquid state when a specific threshold temperature is exceeded.

9. A cutting element according to any of the preceding claims, **characterized in that** the recesses (5) are configured as notches (11).

10. A cutting element according to claim 9, **characterized in that** there is a preferably cylindrical ring (19) arranged in the substantially cylindrical portion (4, 4.1, 4.2).

11. A cutting element according to any of the preceding claims, **characterized by** at least one tab (36, 43) which originates on the side of the cutting element (1) facing away from the cutting portion (31) and is capable of being introduced into a cutter support (7).

12. A cutting element according to claim 11, **characterized in that** the at least one tab (36, 43) has a holding device.

13. A cutting element according to claim 11 or 12, **characterized in that** the at least one tab (36, 43) has a recess or aperture with which a projection originating from the inner side of the cutter support (7) may engage.

14. A cutting element according to claim 13, **characterized in that** the recess or aperture has a substantially triangular contour.

15. A cutting element according to claim 14, **characterized in that** the recess or aperture has a curved contour which - seen from the cutting portion (3) - is configured concavely and serves as an abutment face for the projection of the cutter support (7).

16. A cutting element according to claim 15, **characterized in that** the contour is arranged and adapted to the projection in such a way that, when the cutting element (1) and the cutter support (7) are rotated relative to each other, the clamping forces acting in an axial direction between these parts increase.

17. A cutter support for a cutting element according to any of claims 1 to 16, said cutter support having an opening (13) for the cutting element (1), **characterized by** a conically configured portion (16, 18) whose cone angle opens in the direction opposite from the opening (13) for the cutting element (1), and by raised parts in the conical portion for receiving the recesses (5, 11) of the cutting element (1).

18. A cutter support according to claim 17, **characterized in that** the cone angle is 1° to 6°.

19. A cutter support according to claim 17 or 18, **characterized in that**, in the direction opposite from the opening (13) for the cutting element (1), the conically configured portion (16, 18) is adjoined by a cylindrical portion (20) that preferably has a smaller diameter than the conically configured portion (16, 18) at the position where it is furthest from the opening (13) for the cutting element (1).

20. A cutter support according to any of claims 17 to 19, **characterized by** at least one recess or aperture in the wall, with which recess or aperture a fastening device of the cutting element (1) engages.

21. A cutter support according to claims 17 to 20, **characterized by** at least one hole through which an unlocking force may be applied to the at least one tab of the cutting element (1).

22. A hollow drill with a cutting element according to any of claims 1 to 16 and a cutter support, in particular according to any of claims 17 to 21, wherein the cutting element (1) and the cutter support (7) are configured as separate parts.

## Revendications

1. Elément de coupe pour une mèche creuse avec une portion de coupe (3) et une partie en substance cylindrique (4, 4.1, 4.2) qui sur le côté intérieure présente des renfoncements disposés en intervalles - de préférence réguliers - s'ouvrant en direction de la portion de coupe (3) où la partie en substance cylindrique (4, 4.1, 4.2) présente une forme intérieure polygonale **caractérisée en ce que** les arêtes (7) sont liées ensemble par chaque fois un renfoncement (5) et la forme intérieure polygonale se change de manière conique en une forme intérieure cylindrique (4.2) au niveau d'un côté en face de la portion de coupe.

2. Elément de coupe selon revendication 1, **caractérisé en ce que** les renfoncements (5) sont orientés en direction axiale.

3. Elément de coupe selon revendication 1 ou 2, **caractérisé en ce que** les renfoncements (5) sont disposés en direction circonférentielle avec un écart entre eux.

4. Elément de coupe selon revendication 1 ou 2, **caractérisé en ce que** les renfoncements (5) en forme hélicoïdale sont orientés sur la partie intérieure de la partie en substance cylindrique (4, 4.1, 4.2).

5. Elément de coupe selon une des revendications précédentes, **caractérisé en ce que** l'élément de coupe (1) se compose de carbure de tungstène et/ou de céramique et/ou comporte un revêtement diamant.

6. Elément de coupe selon une des revendications précédentes, **caractérisé en ce que** la portion de coupe (3) comporte des renfoncements supplémentaires (9) orientés de préférence en forme hélicoïdale.

7. Elément de coupe selon une des revendications précédentes, **caractérisé en ce que** dans la partie en substance cylindrique (4, 4.1, 4.2), un lubrifiant est intégré en particulier à l'intérieur des renfoncements (5).

8. Elément de coupe selon revendication 7, **caractérisé en ce que** le lubrifiant passe dans l'état liquide lors du dépassement d'une température limite déterminée.

9. Elément de coupe selon une des revendications précédentes, **caractérisé en ce que** les renfoncements (5), sont réalisés sous forme d'entailles (11).

10. Elément de coupe selon revendication 9, **caractérisé en ce que** dans la partie en substance cylindrique (4, 4.1, 4.2) une bague de préférence de forme cylindrique (19) est disposée.

11. Elément de coupe selon une des revendications précédentes, **caractérisé par** au moins une patte (36, 43), qui débute sur le côté de l'élément de coupe (1) détourné par rapport à la portion de coupe (31) et qu'on peut insérer dans un support de lame (7).

12. Elément de coupe selon revendication 11, **caractérisé en ce que** l'au moins une patte (36, 43) comporte un dispositif de support.

13. Elément de coupe selon revendication 11 ou 12 , **caractérisé en ce que** l'au moins une patte (36, 43) comporte un renfoncement ou un évidement, dans lequel une saillie partant de la partie intérieure du support de lame (7) peut venir en prise.

14. Elément de coupe selon revendication 13, **caractérisé en ce que** le renfoncement ou l'évidement présente un contour en substance triangulaire.

15. Elément de coupe selon revendication 14, **caractérisé en ce que** le renfoncement ou l'évidemment présente un contour incurvé, qui - vu à partir de la portion de coupe (3)- est formé de façon concave et sert de surface d'appui pour la saillie du support de lame (7).

16. Elément de coupe selon revendication 15, **caractérisé en ce que** le contour est ainsi disposé et coordonné avec la saillie que lors d'une rotation relative entre élément de coupe (1) et support de lame (7) agissant en direction axiale - les forces de serrage entre ces éléments augmentent.

17. Support de lame pour un élément de coupe selon une des revendications 1 à 16, présentant une ouverture (13) pour l'élément de coupe (1), **caractérisé par** une partie réalisée de manière conique (16, 18), dans laquelle l'angle conique s'ouvre pour l'élément de coupe dans le sens contraire de l'ouverture (13), et des augmentations dans la partie conique pour la réception des renfoncements (5,11) de l'élément de coupe (1).

18. Support de lame selon revendication 17, **caractérisé en ce que** l'angle conique se situe entre 1° - 6°.

19. Support de lame selon revendication 17 ou 18, **caractérisé en ce que**, se rattache dans le sens contraire de l'ouverture (13) pour l'élément de coupe (1), à la partie réalisée de manière conique (16, 18), une partie cylindrique (20) qui présente de préférence un diamètre plus petit que la partie réalisée de manière conique (16, 18), à l'endroit où il est le plus éloigné de l'ouverture (13) pour l'élément de coupe (1).

20. Support de lame selon une des revendications 17 à 19, **caractérisé par** au minimum un renfoncement ou un évidement dans la paroi, dans laquelle s'enclenche un dispositif de support de l'élément de coupe (1).

21. Support de lame selon revendications 17 à 20, **caractérisé par** au moins un franchissement, au travers de laquelle l'au moins une patte de l'élément de coupe (1) est escamotable avec une force de déverrouillage.

22. Mèche creuse avec un élément de coupe selon une des revendications 1 à 16 et un support de lame, en particulier selon une des revendications 17 à 21, où l'élément de coupe (1) et le support de lame (7) sont réalisés comme des éléments séparés.
